# EUROPEAN PATENT APPLICATION

(11) **EP 4 238 636 A1**
(43) Date of publication of application: **06.09.2023**
(21) Application number: 21885248.1
(22) Date of filing: 28.10.2021
(51) Int. Cl.: B01F 21/20, B01F 23/20, C10G 67/00

(54) **HEAVY OIL HYDROGENATION REACTION SYSTEM AND HEAVY OIL HYDROGENATION METHOD**

(30) Priority: 28.10.2020 CN 202011169963; 28.10.2020 CN 202011169967
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: WANG, Gang, Dalian, Liaoning 116045 (CN); YANG, Xiuna, Dalian, Liaoning 116045 (CN); JIN, Ping, Dalian, Liaoning 116045 (CN); NIU, Shikun, Dalian, Liaoning 116045 (CN); RUAN, Zonglin, Dalian, Liaoning 116045 (CN); ZHOU, Feng, Dalian, Liaoning 116045 (CN); XU, Dahai, Dalian, Liaoning 116045 (CN); LI, Shicai, Dalian, Liaoning 116045 (CN)
(74) Representative: Hoffmann Eitle
(86) International application number: PCT/CN2021/126972
(87) International publication number: WO 2022/089521

(57) **Abstract**

The present invention discloses a microchannel mixer, comprising a microchannel component and a shell, wherein the microchannel component is fixed inside the shell, wherein an inlet is provided at one end of the shell for feeding liquid and gas phase materials, and an outlet is provided at the other end for discharging the mixed material; said microchannel component comprises multiple stacked sheets and several layers of oleophilic and/or hydrophilic fiber filaments filled in the crevices between adjacent sheets, wherein the fiber filaments form several microchannels between them, and the fiber filaments are clamped and fixed by the sheets. The present invention also discloses a heavy oil hydrogenation reaction system comprising the above-mentioned microchannel mixer and a heavy oil hydrogenation process.

## Description

### Technical Field

The present invention belongs to the field of heavy oil hydrogenation, and specifically relates to a heavy oil hydrogenation reaction system and a heavy oil hydrogenation process.

### Background Technology

Heavy oil hydrotreatment technology is one of the hotspots in the research of hydrogenation processes. Heavy oil hydrogenation reaction processes and reactors can be divided into various types, such as fixed bed hydrogenation processes and reactors, suspended bed hydrogenation processes and reactors, ebullated bed hydrogenation processes and reactors, etc. Among them, fixed bed hydrogenation reactors are the most widely used and can be used for various types of heavy oil hydrogenation processes. At present, the heavy oil hydrogenation process mainly adopts fixed bed hydrogenation process. During hydrogenation treatment, it is necessary to fully mix the oil raw material with hydrogen gas before entering the reactor and contacting the catalyst for hydrogenation reaction. Fixed bed hydrogenation reaction equipment generally includes an oil and gas mixer and a fixed bed reactor. The mixing effect of the oil and gas mixer and the effective contact of the oil and the gas in the reactor are directly related to the hydrogenation treatment effect. In the existing fixed bed hydrogenation reaction equipment, conventional mixers are generally used as the oil and gas mixer. Due to the high viscosity of heavy oil, the defects such as the non-ideal mixing effect of the two phases and the ease of the phase separation exist, resulting in low reaction rate and lack of hydrogen on the catalyst surface, leading to problems such as coking and carbon deposition, making it difficult for the heavy oil hydrogenation device to operate efficiently for a long period of time.

With the strengthening trend towards heavy crude oil, the increasing demand for light fuel oil in the market, and the increasing environmental requirements, refineries are paying more and more attention to the technology of converting heavy oil into light oil. The methods for converting heavy oil into light oil include thermal cracking and hydrogenation conversion. Due to the low yield of light oil from thermal cracking of heavy oil, hydrogenation conversion can use catalysts to reduce the activation energy of hydrogenation reaction and increase the heavy oil hydrogenation conversion rate. Due to the poor quality of heavy oil, high content of impurities and non-ideal components, and difficulty in processing, it is necessary to undergo chemical reactions between heavy oil and hydrogen gas under high temperature and high pressure in the presence of catalyst to remove harmful impurities such as sulfur, nitrogen, and heavy metals from the heavy oil. The heavy oil is partially converted into light oil such as gasoline and diesel, and the remaining part can be processed through catalysis and coking and wholly converted into gasoline and diesel.

Although the heavy oil hydrogenation process has been widely used, there are still the following problems: (1) The heavy oil raw material has many impurities, making it difficult to remove impurities through hydrogenation. Generally, strict reaction conditions are required, such as high temperature, high pressure, and low space velocity, resulting in high energy consumption; (2) The heavy oil hydrogenation process requires a large hydrogen-to-oil ratio, which is generally required to achieve the desired reaction effect. Therefore, the size of the reactor and reaction system is large and the investment is high; (3) The long residence time of the oil raw material under the conditions of high temperature, high pressure, and low space velocity leads to severe cracking reactions and low yield of light oil; (4) The high hydrogen consumption during the reaction process and the high activity of the catalyst make it difficult for hydrogen molecules to transfer and diffuse to the main body of the oil raw material in a large amount during the consumption process of hydrogen gas, resulting in a hydrogen deficient state and the coking and carbon deposition on the surface of the catalyst. On the one hand, this causes uneven reaction, and on the other hand, it leads to blockage of the catalyst bed and the difficulty in the long-period run. A large part of the reason is that the oil raw material and hydrogen gas are mixed with conventional equipment, resulting in a small amount of dissolved and dispersed hydrogen gas in the phase of the oil raw material. The size of hydrogen gas bubbles is large, and hydrogen gas bubbles cannot exist in large quantities and stably in the phase of the oil raw material.

CN108018074A proposes a heavy oil hydrotreating method to improve the catalyst utilization. After mixing the heavy oil raw material with hydrogen gas, the resulting mixture first passes through the hydropretreating reaction zone for hydrodemetallization and partial desulfurization reactions; the reaction effluent enters the hydrotreatment reaction zone for hydrodesulfurization and hydrodenitrogenation reactions; the reaction temperature in the hydropretreating reaction zone is higher than that in the hydrotreatment reaction zone. The invention mainly removes most of the metals in the material by reacting at higher temperatures in the hydropretreating reaction zone. This method does not fundamentally solve the problems of low hydrogenation reaction rate and hydrogen deficiency, coking, and carbon deposition on the catalyst surface.

CN108102697B proposes a heavy oil hydrotreating process and system. The heavy oil hydrotreating process includes: the heavy oil raw material sequentially passes through a fixed bed hydropretreating reaction zone and a fixed bed hydrotreatment reaction zone arranged in series. The generated oil from the fixed bed hydrotreatment reaction zone enters the ebullated bed hydrocracking reaction zone, and the reaction effluent from the ebullated bed hydrocracking reaction zone is separated to produce dry gas, liquefied gas, naphtha, diesel, gas oil, and unconverted oil. The purpose of this invention is to extend the operating cycle of a heavy oil hydrotreating device, but it is completed by producing an oil through the fixed bed hydrotreating process and then converting the produced oil through the ebullated bed hydrocracking, which not only has a complex technological process, but also has high energy consumption and investment.

CN109306272A proposes a heavy oil hydrotreating system, which includes a main reactor and at least one sub-reactor. The main reactor includes a first cylinder, which is used to hold a material, and the sub-reactor includes a mixing unit for mixing the material and hydrogen gas. The mixing unit includes a second cylinder and an intensifying device. The second cylinder is equipped with a material inlet, a hydrogen inlet, and a first outlet. The material inlet is communicated with the outlet of the first cylinder. The inlet of the intensifying device is communicated with the first outlet of the second cylinder, and the outlet of intensifying device is communicated with the containing cavity of the first cylinder. The intensifying device is used to provide energy to the material to cause the cracking reaction thereof.

CN108659882A proposes a heavy oil hydrogenation method and its hydrogenation system, wherein the heavy oil hydrogenation method comprises: mixing a heavy oil, a cycle oil, a vulcanizing agent, and a catalyst, and hydrocracking the resulting mixture with hydrogen gas in a first reactor to produce a first reaction product; returning a part of the first reaction product to the first reactor, and hydrocracking the remaining materials in a second reactor to produce a second reaction product; separating the second reaction product into light components and heavy components, returning a part of heavy components to the second reactor, and separating the remaining heavy components to produce a distillate oil as cycle oil; hydrorefining the light components in a third reactor to produce light oil products. The main purpose of this inventive method is to improve the efficiencies of heat transfer and mass transfer, but it is only through conventional hydrogenation reactor structure and hydrogen/oil mixing method, which cannot effectively control the contact time between the catalyst and the raw material, nor can it guarantee the conversion rate of heavy oil and the yield of light oil.

### Summary of the Invention

Aiming at the shortcomings of the existing technology, the present invention provides a microchannel mixer. The microchannel mixer is applied to the heavy oil hydrogenation reaction system and the heavy oil hydrogenation process. By introducing a hydrogen-carrying fluid during the heavy oil hydrogenation process, the reaction rate and the conversion depth of the heavy oil hydrogenation are improved, and the carbon deposition and coking on the catalyst surface is suppressed, which guarantees that the heavy oil hydrogenation reaction system can be operated for a long period at a low hydrogen-to-oil ratio and a high space velocity; alternatively, by forming a "hydrogen-rich gas-in-oil fluid" with an oil raw material and a hydrogen-carrying fluid, the hydrogenation reaction occurs in the catalyst bed layer, which increases the reaction rate and the conversion depth of the heavy oil hydrogenation, inhibits the carbon deposition and coking on the catalyst surface, improves the yield of light oil, and prolongs the operation cycle of the device.

For the heavy oil hydrogenation reaction, on the one hand, it is necessary to ensure the two-phase mixing effect of heavy oil and hydrogen gas in the early stage of the reaction, which is crucial for providing good physical conditions for achieving efficient and uniform reactions in the future. On the other hand, due to the intense heat of the heavy oil hydrogenation reaction, the lack of hydrogen for the hydrocarbon oil molecules in contact with the catalyst can lead to the carbon deposition, coking, and blockage on the catalyst surface. Therefore, in the middle to late stages of the reaction, it is necessary to continuously provide stable small hydrogen gas particles for the reaction materials to guarantee that the hydrocarbon oil materials on the catalyst surface do not reach a hydrogen-deficient state at high temperatures, in order to guarantee the long-term and efficient operation of the heavy oil hydrogenation process.

In one aspect, the present invention provides a microchannel mixer, comprising a microchannel component and a shell, wherein the microchannel component is fixed inside the shell, wherein an inlet is provided at one end of the shell for feeding liquid and gas phase materials, and an outlet is provided at the other end for discharging the mixed material; said microchannel component comprises multiple stacked sheets and several layers of oleophilic and/or hydrophilic fiber filaments filled in the crevices between adjacent sheets, wherein the fiber filaments form several microchannels between them, and the fiber filaments are clamped and fixed by the sheets.

In another aspect, the present invention provides a heavy oil hydrogenation reaction system, including a micro-mixing zone and a heavy oil hydrogenation reaction zone, wherein the micro-mixing zone is used for the mixing of a diluent oil and hydrogen to obtain a hydrogen-carrying fluid, and the micro-mixing zone includes at least one microchannel mixer of the present invention;
wherein said microchannel mixer has an inlet for feeding diluent oil and hydrogen, and an outlet for discharging the hydrogen-carrying fluid;
said heavy oil hydrogenation reaction zone includes at least one heavy oil hydrogenation reactor, in which one or more catalyst beds are arranged, and a hydrogen-carrying fluid distribution component is arranged above at least one catalyst bed, when multiple catalyst beds are arranged, preferably a hydrogen-carrying fluid distribution component is arranged above any of the catalyst beds; a feeding mixer is arranged at the bottom of each reactor;
said hydrogen-carrying fluid distribution component is communicated with the outlet of the microchannel mixer through pipeline.

In another aspect, the present invention provides a heavy oil hydrogenation reaction system, including a hydrogen-carrying fluid formation zone, a high hydrogen-containing mixed fluid formation zone, and a heavy oil hydrogenation reaction zone; said hydrogen-carrying fluid formation zone comprises at least one microchannel mixer of the present invention,
said microchannel mixer has an inlet for feeding diluent oil and hydrogen, and an outlet for discharging the hydrogen-carrying fluid;
said high hydrogen-containing mixed fluid formation zone includes at least one inorganic membrane hydrogen-oil disperser, the inorganic membrane hydrogen-oil disperser has a tube-shell type structure containing inorganic membrane tube components, and there is a bundle of inorganic membrane tubes in the interior of the shell, a heavy oil raw material pipeline is communicated with the inlet end of the bundle of inorganic membrane tubes, a hydrogen pipeline is communicated with the shell space; hydrogen gas diffuses into the bundle of inorganic membrane tubes through the inorganic membrane tube wall to form a high hydrogen-containing mixed fluid with the heavy oil raw material, the outlet end of the bundle of inorganic membrane tubes is the outlet of the high hydrogen-containing mixed fluid;
said heavy oil hydrogenation reaction zone includes at least one heavy oil hydrogenation reactor, in which one or more catalyst beds are arranged, and a micro-mixing zone is arranged below at least one catalyst bed,
a hydrogen-carrying fluid distribution component is located at the top of said micro-mixing zone, and a high hydrogen-containing mixed fluid distribution component is located at the bottom; when multiple catalyst beds are arranged, a micro-mixing zone is arranged below any of the catalyst beds;
said hydrogen-carrying fluid distribution component is communicated with the material outlet of the microchannel mixer through pipeline,
said high hydrogen-containing mixed fluid distribution component is communicated with the material outlet of the inorganic membrane hydrogen-oil disperser.

The bundle of inorganic membrane tubes can be made of one or more of ceramic membrane, metal membrane, metal/ceramic composite membrane, alloy membrane, molecular sieve composite membrane, zeolite membrane, glass membrane and the like. The tube wall of the inorganic membrane tube generally has a hole diameter of 10nm-1µm.

According to the heavy oil hydrogenation reaction system of the present invention, the microchannel component in the shell of the microchannel mixer is divided into a feeding end and a discharging end along the direction of the crevice, wherein a feeding distribution space is provided between the inlet and the feeding end, and a discharging distribution space is provided between the outlet and the discharging end, in order to prevent the short circuit of materials and guarantee the materials flowing from the feeding end to the discharging end within the microchannel component, except for the feeding end and the discharging end, all other ends of the microchannel component are connected to the shell in a sealed manner.

According to the heavy oil hydrogenation reaction system of the present invention, said fiber filaments can be arranged in single or multiple layers, preferably 1-50 layers, and more preferably 1-5 layers; when arranged in multiple layers, preferably the projection of two adjacent layers of fiber filaments along the vertical direction of the sheets forms a mesh structure; the mesh shape in a mesh structure can be an arbitrary shape, such as one or more of polygon, circle, ellipse, and the like; in each layer of fiber filaments, the distance between adjacent fiber filaments is generally 0.5µm-50µm, preferably arranged at equal intervals; the fiber filaments are arranged along any of the transverse, longitudinal or oblique direction of the surface of the sheet; the fiber filaments can have an arbitrary curve shape, preferably a periodically changing curve shape, such as a wavy shape and a serrated shape, preferably the fiber filaments in the same layer have the same shape, and more preferably, the fiber filaments in all layers have the same shape.

According to the heavy oil hydrogenation reaction system of the present invention, said fiber filaments generally have a diameter of 0.5-50µm, preferably 0.5-5µm, more preferably 0.5-1µm. said lipophilic fiber filaments is generally at least one of a polyester fiber filament, a nylon fiber filament, a polyurethane fiber filament, a polypropylene fiber filament, a polyacrylonitrile fiber filament, a polyvinyl chloride fiber filament, or an oleophilically surface-treated fiber filament material; said hydrophilic fiber filament is generally selected from one or more of a high molecular polymer containing at least one hydrophilic group in its main chain or side chain or a fiber filament that has been hydrophilically treated with a physical or chemical method, wherein the hydrophilic group for example includes carboxyl (-COOH), amido (-CONH-), amino (-NH₂-), or hydroxyl (-OH), and the more hydrophilic groups they contain, the better their hydrophilicity. Commonly used fibers include polypropylene fiber, polyamide fiber, acrylic fiber, and the like.

According to the heavy oil hydrogenation reaction system of the present invention, the crevices between said adjacent sheets can be wholly filled with any one of the lipophilic or hydrophilic fiber filament; or alternatively, the lipophilic and hydrophilic fiber filaments can be filled in a certain proportion, preferably with a filling ratio by weight of 1:50-50:1; The surface properties of the fiber filaments filled between the crevices can be identical or different, preferably with the same surface property and filling manner.

According to the heavy oil hydrogenation reaction system of the present invention, the thickness of the sheet is generally 0.05mm-5mm, preferably 0.1-1.5mm. The material of the sheet is generally determined by the properties of the flowing material and the operating conditions, and can be any one or more of materials such as metal, ceramic, organic glass, or polyester. Stainless steel (such as SS30403, SS30408, SS32168, and SS31603) in the metal material is preferred. There is no limit to the shape of the sheet, and it can be any one of rectangle, square, polygon, circle, ellipse, or sector, preferably rectangle or square. The size and amount of the sheets can be designed and adjusted according to the actual needs of the reaction. Generally, the sheets of the same shape and size are used in the microchannel component.

According to an embodiment of the heavy oil hydrogenation reaction system of the present invention, the mode of feeding at a lower position is adopted for said heavy oil hydrogenation reactor; said feeding mixer preferably adopts a tube-shell type ceramic membrane tube assembly, the heavy oil feeding pipeline is communicated with the ceramic membrane tube side, and the hydrogen pipeline is communicated with the cavity in the shell outside of the ceramic membrane tube. The ceramic membrane tubes are arranged along the axial direction of the reactor, and the amount and size of ceramic membrane tubes can be set according to the size of the reactor and the actual needs of the reaction. Hydrogen diffuses outward through the wall of the ceramic membrane tube to form micron-sized bubbles with a size of 10µm-1mm, preferably 100-900µm. Said feeding mixer can be installed outside the reactor or inside the reactor, preferably inside the reactor, so that the mixed materials directly enter the catalyst bed for reaction, reducing the flash evaporation of the materials and affecting the dispersion effect of microscopic bubbles.

According to an embodiment of the heavy oil hydrogenation reaction system of the present invention, said hydrogen-carrying fluid distribution component is in the form of tube, disc, jet, branch or the like, with the distribution holes and/or slits of said hydrogen-carrying fluid distribution component facing downwards and in the counter-flow or cross-flow contact with the upward-flowing material in the reactor.

According to an embodiment of the heavy oil hydrogenation reaction system of the present invention, the micron-sized bubbles in the hydrogen-carrying fluid formed by said microchannel mixer generally have a size of 0.5-900µm, preferably 0.5-50µm, and when the disperse uniformity is >_80%, their supplement to the heavy oil hydrogenation reaction zone can effectively intensify the heavy oil hydrogenation reaction process and achieve the desirable reaction effect. Of course, according to the actual needs of the heavy oil hydrogenation reaction process, regardless of whether the disperse uniformity of hydrogen bubbles reaches >_ 80%, as long as the dispersion phase particles are between 0.5-900µm, they can also be supplemented between the catalyst beds of the reactor.

According to an embodiment of the heavy oil hydrogenation reaction system of the present invention, micron-sized bubbles in the hydrogen-carrying fluid formed by said microchannel mixer generally have a size of 0.5-900µm, preferably 0.5-50µm, and preferably the disperse uniformity of micron-sized bubbles in the hydrogen-carrying fluid is >_80%.

According to an embodiment of the heavy oil hydrogenation reaction system of the present invention, preferably 2-10 catalyst beds are arranged. A cold hydrogen pipeline is arranged between the catalyst beds, and the amount of the cold hydrogen pipelines is set according to the actual need to timely remove the reaction heat and make the hydrogenation reaction process more uniform.

According to an embodiment of the heavy oil hydrogenation reaction system of the present invention, the hydrogen used in the micro-mixing zone and the hydrogen used in the heavy oil hydrogenation reaction zone can be generally a fresh hydrogen gas or a recycled hydrogen gas, preferably a fresh hydrogen gas having a purity of greater than 90 vol% or a recycled hydrogen gas having a purity of greater than 85 vol%.

According to an embodiment of the heavy oil hydrogenation reaction system of the present invention, preferably 2-10 catalyst beds are arranged in said heavy oil hydrogenation reactor. The cold hydrogen pipeline can be optionally arranged between the catalyst beds, and the effect of the cold hydrogen can also be achieved by adjusting the proportion of hydrogen gas in the high hydrogen-containing mixed fluid. The mode of feeding at a lower position is adopted for said heavy oil hydrogenation reactor; and said heavy oil raw material and hydrogen gas are preferably pre-mixed with a mixing device before entering the reactor.

According to an embodiment of the heavy oil hydrogenation reaction system of the present invention, in the micro-mixing zone under said catalyst bed, the hydrogen-carrying fluid is introduced from the upper part, and the high hydrogen-containing mixed fluid is introduced from the lower part; said hydrogen-carrying fluid distribution component can be generally in the form of tube, disc, jet, branch or the like; said high hydrogen-containing mixed fluid distribution component is generally in form of sieve plate with open pores, grid or the like; distribution holes and/or slits of said hydrogen-carrying fluid distribution component direct downward, distribution holes and/or slits of said high hydrogen-containing mixed fluid distribution component run through up and down; a "hydrogen-rich gas-in-oil fluid" is formed by means of the counter-flow or cross-flow contact of the downward-flowing hydrogen-carrying fluid and the upward-flowing high hydrogen-containing mixed fluid, and reaction feeds.

According to an embodiment of the heavy oil hydrogenation reaction system of the present invention, the hydrogen used can be generally a fresh hydrogen gas or a recycled hydrogen gas, preferably a fresh hydrogen gas having a purity of greater than 90 vol% or a recycled hydrogen gas having a purity of greater than 85 vol%.

The present invention also provides a heavy oil hydrogenation reaction process, which comprises: (1) in the micro-mixing zone, a diluent oil and hydrogen gas I enter the microchannel mixer, and the resulting mixture flows through the microchannels between fiber filaments in the microchannel component, and is successively cut multiple times by the fiber filaments, forming a hydrogen-carrying fluid containing a large number of micron-sized particles; (2) in the heavy oil hydrogenation reaction zone, a heavy oil raw material and hydrogen gas II enter the feeding mixer from the bottom of the heavy oil hydrogenation reactor, and the resulting mixed material enters the catalyst bed(s) from bottom to top; at the same time, the hydrogen-carrying fluid from the micro-mixing zone enters the catalyst bed(s) from top to bottom, and the two reaction streams come into contact for the hydrogenation reaction; the reaction product flows out from the top of the heavy oil hydrogenation reactor.

In an embodiment of the heavy oil hydrogenation reaction process of the present invention, said hydrogen-carrying fluid is a diluent oil carrying a large number of small hydrogen gas bubbles; the volume flow ratio of hydrogen gas I (Nm³/h) to the diluent oil (m³/h) in said hydrogen-carrying fluid is generally 300:1 to 1:1, preferably 50:1 to 5:1.

In an embodiment of the heavy oil hydrogenation reaction process of the present invention, in the heavy oil hydrogenation reaction zone, cold hydrogen is supplemented between the catalyst beds to remove the reaction heat, so as to maintain a uniform reaction temperature within the catalyst beds.

In an embodiment of the heavy oil hydrogenation reaction process of the present invention, said hydrogen-carrying fluid is divided into multiple streams, preferably 2-4 streams along the axial direction of the reactor to enter the catalyst beds, the flow rate of each stream of the hydrogen-carrying fluid gradually increases from bottom to top along the axial direction of the reactor (for example, the flow rate of the latter stream increases by 5-20wt% relative to the flow rate of the former stream). It is guaranteed by the manner of gradually adding and supplementing the hydrogen-carrying fluid that the oil raw material phase and the catalyst surface in the middle and later stages of the reaction is in a hydrogen-rich state. On the one hand, this is to make the hydrogenation reaction process more efficient, and on the other hand, to alleviate and suppress the coking on the catalyst surface during the high-temperature stage of the reaction.

In an embodiment of the heavy oil hydrogenation reaction process of the present invention, the mixing conditions of said micro-mixing zone generally include: the temperature is 50-380°C, and the pressure is 10.0-20.0 MPaG.

In an embodiment of the heavy oil hydrogenation reaction process of the present invention, the micron-sized bubbles in the hydrogen-carrying fluid generally have a size of 0.5-900µm, preferably 0.5-50µm, and when the disperse uniformity is >_80%, their supplement between the catalyst beds of the heavy oil hydrogenation reaction zone can effectively intensify the heavy oil hydrogenation reaction process and achieve the desirable reaction effect. Of course, according to the actual needs of the heavy oil hydrogenation reaction process, regardless of whether the disperse uniformity of hydrogen bubbles reaches >_ 80%, as long as hydrogen bubbles are between 0.5-900µm, they can also be supplemented between the catalyst beds of the reactor.

In an embodiment of the heavy oil hydrogenation reaction process of the present invention, a part of or the whole of the diluent oil can be any one or more of crude oil, gasoline, kerosene, diesel, atmospheric residue, vacuum residue, gas oil, deasphalted oil, coal tar oil, lubricating oil, anthracene oil or the like.

In an embodiment of the heavy oil hydrogenation reaction process of the present invention, the heavy oil is a residual heavy oil after extracting gasoline and diesel from crude oil, and has a specific gravity of 0.82-0.95. In general, it can be any one or more of atmospheric residue, vacuum residue, cracked residue, cracked diesel, catalytic diesel, vacuum gas oil, deasphalted oil, and the like.

In an embodiment of the heavy oil hydrogenation reaction process of the present invention, the volume flow ratio of hydrogen gas II (Nm³/h) to heavy oil raw material (m³/h) is generally 100:1 to 1200:1, preferably 300:1 to 600:1.

In an embodiment of the heavy oil hydrogenation reaction process of the present invention, the conditions of the heavy oil hydrogenation reaction generally comprise: the temperature is 350-480°C, the pressure is 10-20.0 MPaG, the space velocity is 0.1-1.0 h⁻¹, and the hydrogen/oil volume ratio is 100:1-1500:1; the operation conditions of the feeding mixer at the bottom of the reactor are identical to the conditions of the hydrogenation reaction.

In an embodiment of the heavy oil hydrogenation reaction process of the present invention, the catalyst bed(s) in the heavy oil hydrogenation reactor is/are filled with conventional heavy oil hydrogenation catalysts in the art, such as hydrogenation protectants, desulfurizers, denitrifiers, residual carbon-removal agents, demetallizers, and the like for removing impurities such as sulfur, nitrogen, oxygen, arsenic, metals, residual carbon and the like from the heavy oil raw material. The catalysts can be loaded in stages or the catalysts having the above two or more functions, for example, the hydrogenation protectant FZC-100B, the desulfurizer FZC-34BT, the denitrification/residual carbon-removal agent FZC-41A, and the demetallizer FZC-204A developed by Fushun Petrochemical Research Institute, can be used.

In the fixed bed heavy oil hydrogenation process, a major problem is that as the amount of coke and metal deposition on the catalyst increases, the catalyst rapidly deactivates. The most mature solution in the prior art is to control the reaction process by filling the fixed bed catalyst(s) in stages to alleviate this problem. However, coke deposition generally occurs in the high temperature stage in the middle and later stages of the reaction, that is, at the top layer of the catalyst. These coke deposits can block the flow channels in the catalyst, resulting in a rapid increase in pressure drop at the top of the reactor and shortening the operation cycle. The reason for the coking on the catalyst surface is largely due to the high content of impurities in the heavy oil raw material. The reaction is relatively intense during the high-temperature reaction process. As a result, the hydrogen gas in the oil raw material in contact with the catalyst surface is quickly consumed and there is no time to supplement the hydrogen. That is to say, the coking on the catalyst surface is caused by the hydrogen deficiency on the catalyst surface. Therefore, in the middle and later stages of the reaction, sufficient hydrogen gas that can contact with the catalyst surface and is subjected to the mass transfer, should be promptly supplemented to the reaction materials, which plays an important role in improving the coking and coke deposition during the fixed bed heavy oil hydrogenation and prolonging the operating cycle. The present invention first adopts a feeding mixer to make the heavy oil raw material and hydrogen gas form a homogeneous phase after appropriately mixing two phases in said feeding mixer, and make hydrogen gas form stable micron-sized particles in the heavy oil. The hydrogen gas is evenly dispersed all around the heavy oil molecules, which can make the heavy oil hydrogenation reaction more uniform in the initial stage and prevent the appearance of coking precursors. As the hydrogenation reaction progresses, hydrogen gas is continuously consumed. At this time, if an ordinary hydrogen is supplemented, due to the presence of interfacial resistance, hydrogen gas cannot quickly break through the interfacial resistance and reach the main body of the heavy oil liquid phase on the catalyst surface. Therefore, the present invention uses a channel mixing device in the micro-mixing zone to prepare a hydrogen-carrying fluid, which is continuously supplemented at different stages of the reaction process, so that the hydrogen-carrying fluid and the reaction material are in the counter-flow/cross-flow contact for the mass transfer. During this process, the two-phase interfacial resistance is broken through, allowing the hydrogen gas in the hydrogen-carrying fluid to quickly diffuse to the periphery of the heavy oil molecules and supplement the required hydrogen gas in a timely manner, thereby guaranteeing the hydrogen-rich state on the catalyst surface, greatly suppressing the carbon deposition and coking on the catalyst surface, and making the reaction more uniform, allowing the device to operate for a long period at a low hydrogen-to-oil ratio and a high space velocity.

The process of the present invention has the following technical effects: (1) the heavy oil raw material and hydrogen gas form a homogeneous phase through a suitable mixer, and the hydrogen molecules are uniformly dispersed inside the main body of the heavy oil phase, making the initial stage of the heavy oil hydrogenation reaction more uniform and preventing the occurrence of coking precursors, thereby playing a good role in inhibiting or slowing down the coking on the catalyst surface in the middle and later stages; (2) The microchannel mixing device of the present invention is used to micro-mix the diluent oil and hydrogen gas to form a hydrogen-carrying fluid, which is continuously supplemented to the middle and later stages of the reaction in the heavy oil hydrogenation process, timely supplying hydrogen gas for the reaction, and improving the reaction rate and the conversion depth of the heavy oil hydrogenation reaction process; (3) When the hydrogen-carrying fluid is supplemented into the reactor, a distribution component that has a distribution opposite to the flow direction inside the reactor is used to make the hydrogen-carrying fluid and the reaction material in the counter-flow/cross-flow contact for the mass transfer in the reactor; during this process, the two-phase interfacial resistance is broken through, allowing the hydrogen gas in the hydrogen-carrying fluid to quickly diffuse for the mass transfer to the main body of the heavy oil phase, guaranteeing a hydrogen-rich state on the catalyst surface, which can greatly inhibit the carbon deposition and coking on the catalyst surface, and can also make the reaction more uniform; (4) Due to the fact that the microchannel reactor for generating the hydrogen-carrying fluid in the process of the present invention is developed based on the principle of forced repeated cutting of materials by oleophilic and/or hydrophilic fiber filaments in the microchannel, it still has good mixing effect for the material systems with high gas-liquid ratio, high material viscosity, and high impurity content, and has the advantage of wide applicability, overcoming the shortcomings of other microchannel mixing devices.

The present invention also provides a heavy oil hydrogenation process, which comprises: (1) a hydrogen-carrying fluid, containing a large number of micron-sized particles formed from a diluent oil and hydrogen gas I with the microchannel mixer in a hydrogen-carrying fluid formation zone, enters the upper part of the micro-mixing zone and flows downward; (2) a high hydrogen-containing mixed fluid, formed by dispersing a heavy oil raw material and hydrogen gas II with an inorganic membrane hydrogen-oil disperser in the high hydrogen-containing mixed fluid formation zone, enters the lower part of the micro-mixing zone and flows upward; (3) in the heavy oil hydrogenation reaction zone, a heavy oil raw material and hydrogen gas III enter the bottom of the heavy oil hydrogenation reactor and enter the micro-mixing zone from bottom to top, mix with the hydrogen-carrying fluid and/or the high hydrogen-containing mixed fluid and form a "hydrogen-rich gas-in-oil fluid", which enters the catalyst bed(s) for the hydrogenation reaction, and the hydrogenation reaction product flows out from the top of the reactor.

In an embodiment of the heavy oil hydrogenation reaction process of the present invention, the volume flow ratio of hydrogen gas I (Nm³/h) to the diluent oil (m³/h) is generally 100:1 to 1:1, preferably 50:1 - 5:1. The mixing conditions of said microchannel mixer generally comprise: the temperature is from normal temperature to 380°C, preferably 50-120°C, and the pressure is 10.0-20.0 MPaG.

In an embodiment of the heavy oil hydrogenation reaction process of the present invention, said hydrogen-carrying fluid is provided with at least one stream, preferably divided into multiple streams, preferably 2-4 streams along the axial direction of the reactor to enter the micro-mixing zones, and said high hydrogen-containing mixed fluid is provided with at least one stream, preferably divided into multiple streams, preferably 2-4 streams along the axial direction of the reactor to enter the micro-mixing zones; the stream number of the hydrogen-carrying fluid can be identical to or different from, preferably identical to, that of the high hydrogen-containing mixed fluid.

In an embodiment of the heavy oil hydrogenation reaction process of the present invention, the diluent oil can be any one or more of crude oil, gasoline, kerosene, diesel, atmospheric residue, gas oil, or the like.

In an embodiment of the heavy oil hydrogenation reaction process of the present invention, said heavy oil raw material generally has a specific gravity of 0.82-0.998 g/cm³, and can be any one or more of atmospheric residue, vacuum residue, cracked residue, cracked diesel oil, catalytic diesel, vacuum gas oil, deasphalted oil, coal tar oil, lubricating oil, anthracene oil or the like.

In an embodiment of the heavy oil hydrogenation reaction process of the present invention, the volume flow ratio of hydrogen gas III (Nm³/h) to heavy oil raw material (m³/h) is generally 100:1 to 800:1, preferably 50:1 to 300:1.

In an embodiment of the heavy oil hydrogenation reaction process of the present invention, the conditions for the heavy oil hydrogenation reaction generally comprise: the temperature is 320-480°C, the pressure is 10-20.0 MPaG, the space velocity is 0.1-1.0 h⁻¹, the hydrogen/oil volume ratio 100:1-1200:1.

In an embodiment of the heavy oil hydrogenation reaction process of the present invention, the volume flow ratio of hydrogen gas II (Nm³/h) to the oil raw material (m³/h) is generally 1:1 to 500:1, preferably 50:1 to 300:1. The dispersing conditions of the inorganic membrane hydrogen-oil disperser generally comprise: the temperature is from normal temperature to 380°C, preferably 50-180°C, and the pressure is 10.0-20.0 MPaG.

In an embodiment of the heavy oil hydrogenation reaction process of the present invention, the micro-mixing zone(s) of the heavy oil hydrogenation reactor can be filled with an inert ceramic ball, or a protective agent with hydrogenation function, serving as a place for containing impurities and performing the micro-mixing; the catalyst bed(s) is/are filled with conventional heavy oil hydrogenation catalysts in the art, such as hydrogenation protectants, desulfurizers, denitrifiers, residual carbon-removal agents, demetallizers, and the like for removing impurities such as sulfur, nitrogen, oxygen, arsenic, metals, residual carbon and the like from the heavy oil raw material. The catalysts can be loaded in stages or the catalysts having the above two or more functions, for example, the hydrogenation protectant FZC-100B, the desulfurizer FZC-34BT, the denitrification/residual carbon-removal agent FZC-41A, and the demetallizer FZC-204A developed by Fushun Petrochemical Research Institute, can be used.

In the fixed bed heavy oil hydrogenation process, a major problem in the existing technologies is the rapid deactivation of the catalyst due to coke deposition and coking on the catalyst. Currently, the most mature solution is to control the reaction process by filling the fixed bed catalyst(s) in stages to alleviate this problem. Due to the fact that the coke deposition generally occurs in high-temperature or non-uniform reaction zones, the reactions in these high-temperature zones are relatively intense, causing the hydrogen gas in the oil raw material in contact with the catalyst surface to be quickly consumed. However, the oil raw material does not have enough dissolved hydrogen and dispersed hydrogen to be supplemented in a timely manner, which is caused by the hydrogen deficiency on the catalyst surface. Therefore, during the reaction process, it can effectively improve the problem of the coke deposition and coking in the fixed bed heavy oil hydrogenation by maintaining the phase interface in contact with the catalyst surface in a highly dispersed hydrogen state all along.

Compared with prior art, the present invention has the following beneficial effects: (1) introducing a hydrogen-carrying fluid and/or a high hydrogen-containing mixed fluid into the micro-mixing zone below the catalyst bed layer, causing the hydrogen-carrying fluid and/or the high hydrogen-containing mixed fluid and the reaction materials to undergo the counter-flow/cross-flow contact for the mass transfer, and forming a "hydrogen-rich gas-in-oil fluid". A large number of stable micro bubbles are contained and dispersed in the liquid phase of the reaction material entering the catalyst bed, thereby guaranteeing that the catalyst surface is always in a hydrogen-rich state, improving the reaction rate and the conversion depth of the hydrogenation, significantly inhibiting the carbon deposition and coking on the catalyst surface, making the reaction more uniform, and significantly increasing the reaction rate and the conversion depth of the hydrogenation; (2) The hydrogen-carrying fluid is distributed with a distribution component that has a distribution direction opposite to that of the high hydrogen-containing mixed fluid and the flow direction inside the reactor, making the hydrogen-carrying fluid and the high hydrogen-containing mixed fluid and the reaction material in the counter-flow/cross-flow contact for the mass transfer in the reactor; during this process, the two-phase interface resistance is broken, allowing the hydrogen gas in the high hydrogen-containing mixed fluid to quickly diffuse for the mass transfer to the main body of the heavy oil phase, at the same time, the "hydrogen-rich gas-in-oil fluid" formed by the three is not only stable in the hydrogen dispersion state, but also uniformly dispersed, which can maintain the uniform and efficient reaction within the catalyst bed(s); (3) Due to the fact that the microchannel reactor for generating the hydrogen-carrying fluid in the process of the present invention is developed based on the principle of forced repeated cutting of materials by oleophilic and/or hydrophilic fiber filaments in the microchannel, it still has good mixing effect for the material systems with high gas-liquid ratio, high material viscosity, and high impurity content, and has the advantage of wide applicability, overcoming the shortcomings of other microchannel mixing devices; (4) Due to the wide adjustment range for the content of hydrogen gas in the high hydrogen-containing mixed fluid, it can be flexibly adjusted according to the actual hydrogenation reaction type, making it suitable for hydrogenation reaction processes of various raw materials; (5) Due to the high mass transfer efficiency of the reaction of the present invention, the hydrogenation reaction effect and the inhibition of the carbon deposition are greatly improved, which allows for operation at lower hydrogen-to-oil ratio and higher space velocity, making it more energy-efficient.

### Brief description of the drawings

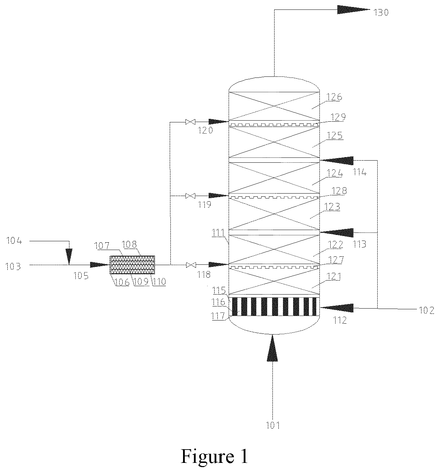

Figure 1 is a schematic diagram of a heavy oil hydrogenation reaction system and a heavy oil hydrogenation process of the present invention, wherein:
101 Heavy oil raw material
102 Hydrogen gas
103 Diluent oil
104 Hydrogen gas I
105 Inlet material of the microchannel mixing device
106 Microchannel mixer
107 Microchannel mixing component
108 Microchannel sheet
109 Crevice between microchannel sheets
110 Oleophilic and/or hydrophilic fiber filaments
111 Heavy oil hydrogenation reactor
112 Hydrogen gas II
113 Cold hydrogen for the 1st bed
114 Cold hydrogen for the 2nd (or nth) bed
115 Feeding mixer
116 Membrane dispersion tube bundle
117 Shell space
118 First hydrogen-carrying fluid
119 Second hydrogen-carrying fluid
120 Third (or nth) hydrogen-carrying fluid
121 First catalyst bed
122 Second catalyst bed
123 Third catalyst bed
124 Fourth catalyst bed
125 Fifth catalyst bed
126 Sixth (or nth catalyst bed)
127 First hydrogen-carrying fluid distribution component
128 Second hydrogen-carrying fluid distribution component
129 Third (or nth) hydrogen-carrying fluid distribution component
130 Reaction product.

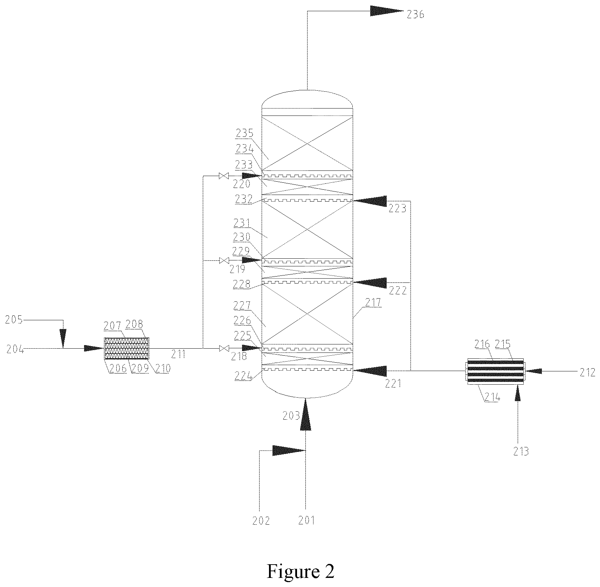

Figure 2 is a schematic diagram of a heavy oil hydrogenation reaction system and a heavy oil hydrogenation process of the present invention, wherein:
201 Heavy oil raw material I
202 Hydrogen gas III
203 Reactor bottom feed
204 Diluent oil
205 Hydrogen gas I
206 Microchannel mixing device
207 Microchannel component
208 Microchannel sheet
209 Crevice between microchannel sheets
210 Fiber filaments
211 Hydrogen-carrying fluid
212 Heavy oil raw material II
213 Hydrogen gas II
214 Inorganic membrane hydrogen-oil disperser
215 Membrane tube bundle
216 Shell space
217 Heavy oil hydrogenation reactor
218 First hydrogen-carrying fluid
219 Second hydrogen-carrying fluid
220 Third hydrogen-carrying fluid
221 First hydrogen-oil mixed fluid
222 Second hydrogen-oil mixed fluid
223 Third hydrogen-oil mixed fluid
224 First hydrogen-carrying fluid distribution component
225 First micro-mixing zone
226 First hydrogen-oil mixed fluid distribution component
227 First catalytic reaction zone
228 Second hydrogen-carrying fluid distribution component
229 Second micro-mixing zone
230 Second hydrogen-oil mixed fluid distribution component
231 Second catalytic reaction zone
232 Third hydrogen-carrying fluid distribution component
233 Third micro-mixing zone
234 Third hydrogen-oil mixed fluid distribution component
235 Third catalytic reaction zone
236 Reaction effluent.

### Detailed description

The following provides a detailed explanation of the present invention in conjunction with the accompanying drawings and examples, without limiting the present invention.

Figure 1 is taken as an example to illustrate the application process of the heavy oil hydrogenation reaction system and the heavy oil hydrogenation process of the present invention:
Firstly, the heavy oil raw material 101 and hydrogen gas II 112 are introduced into the bottom and the side of the heavy oil hydrogenation reactor 111, respectively. Hydrogen gas II enters the shell space 117 of the feeding mixer 115, and the heavy oil raw material 101 enters the membrane dispersion tube bundle 116 of the feeding mixer 115. Hydrogen gas II permeates and diffuses into the membrane dispersion tube bundle 116 under the drive of the pressure difference from the shell space 117, and is mixed with the heavy oil in the tube bundle 116 to form a homogeneous phase before entering the first catalyst bed 121 for the hydrogenation reaction. The diluted oil 103 and hydrogen gas I 104 are mixed through pipeline(s), and the mixture is introduced into the microchannel mixer 106 as the inlet material 105 of the microchannel mixing device. During this process, the material enters the crevice 109 between the microchannel sheets 108 provided in the microchannel mixing component 107. The material is continuously cut multiple times by oleophilic and/or hydrophilic fiber filaments 110 filled in the crevice 109, forming a hydrogen-carrying fluid containing a large number of micro-sized hydrogen particles, which is supplemented between the catalyst beds of the heavy oil hydrogenation reactor 111 as the first hydrogen-carrying fluid 118, the second hydrogen-carrying fluid 119, and the third (or nth) hydrogen-carrying fluid 120 respectively, and then uniformly distributed along the downward direction of the cross-section of the reactor under the action of the first hydrogen-carrying fluid distribution component 127, the second hydrogen-carrying fluid distribution component 128, and the third (or nth) hydrogen-carrying fluid distribution component 129, and perform the counter-flow/cross-flow contact with the reaction material flowing upward in the reactor for the mass transfer. During this process, the enhanced contact mass transfer is carried out to quickly diffuse the hydrogen gas in the hydrogen-carrying fluid to the periphery of the heavy oil molecules, guaranteeing a hydrogen-rich state on the catalyst surface and inhibiting the carbon deposition and coking on the catalyst surface. After the completion of the hydrogenation reaction, the reaction product 130 leaves the reactor. During the reaction process, the reaction heat is removed by supplementing cold hydrogen 113 and 114 between the catalyst beds in the reactor, making the reaction process more uniform. Among them, the hydrogen-carrying fluid and the cold hydrogen are alternately supplemented between the catalyst beds.

The process of the present invention is applied to the heavy oil hydrogenation reaction. The heavy oil raw material is vacuum residue from a certain factory, and the specific properties are shown in Table 1-1. The protectant, the hydrodemetallization catalyst, the hydrodesulfurization catalyst, and the hydrodenitrogenation catalyst used in the heavy oil hydrogenation reaction are FZC-100B, FZC-204A, FZC-34BT, and FZC-41A from Fushun Petrochemical Research Institute, respectively.

**Table 1-1 Properties of heavy oil raw material**

| Item | | Feedstock oil |
|---|---|---|
| Density, g/cm³ | | 0.996 |
| Viscosity, mm²/s | | 855.4 |
| Carbon residue, wt% | | 16.72 |
| Sulfur, wt% | | 1.74 |
| Nitrogen, µg/g | | 6540 |
| SARA analysis, wt% | | |
| | Saturates | 19.5 |
| | Aromatics | 45.4 |
| | Resin | 28.5 |
| | Asphaltene | 6.6 |

### Comparative Example 1-1

A conventional fixed bed heavy oil hydrogenation process was used. The heavy oil raw material and hydrogen gas were mixed. The mixture was heated by the heat-exchanging to the reaction temperature, and sent to the bottom of the residual oil hydrogenation reactor, successively passed through a protectant bed, a demetallization catalyst bed, a desulfurization catalyst bed, and a denitrification catalyst bed, and then left the reactor after the completion of the hydrogenation. Cold hydrogen was injected between the reactor beds to remove the reaction heat. The hydrogenation reaction product was cooled and then sent to a high-pressure separator for the gas-liquid separation. The separated gas was recycled, and the separated liquid was a hydrogenated heavy oil.

The heavy oil shown in Table 1-1 was used as the raw material and subjected to the hydrogenation reaction to produce the hydrogenation product. The reaction conditions and the product properties were shown in Table 1-2.

### Example 1-1

The heavy oil hydrogenation reaction system and the heavy oil hydrogenation process according to the present invention were used. Firstly, the heavy oil raw material and hydrogen gas II were introduced into the bottom and the side of the heavy oil hydrogenation reactor, respectively. Hydrogen gas II entered the shell space of the feeding mixer, and the heavy oil raw material entered the membrane dispersion tube bundle of the feeding mixer. Hydrogen gas II permeated and diffused into the membrane dispersion tube bundle under the drive of the pressure difference from the shell space, and was mixed with the heavy oil in the tube bundle to form a homogeneous phase before entering the first catalyst bed for the hydrogenation reaction. The heavy oil hydrogenation reactor was divided into two beds. From bottom to top, the first bed was filled with the hydrogenation protectant (70v%) and the hydrodemetallization agent (30v%), and the second bed was filled with the hydrodesulfurization agent (60v%) and the hydrodenitrogenation agent (40v%).

Refined diesel as diluent oil and hydrogen gas I were mixed through pipeline, and then entered the microchannel mixing device. Through the crevice between microchannel sheets in the microchannel component, the material was continuously cut multiple times by oleophilic and/or hydrophilic fiber filaments filled in the crevice, forming a hydrogen-carrying fluid containing a large number of micron-sized hydrogen particles, which was supplemented between the first and second catalyst beds of the heavy oil hydrogenation reactor as the first hydrogen-carrying fluid, and then uniformly distributed along the downward direction of the cross-section of the reactor under the action of the hydrogen-carrying fluid distribution component in the catalyst bed, and performed the counter-flow/cross-flow contact with the reaction material flowing upward in the reactor for the mass transfer. After the completion of the hydrogenation reaction, the reaction product was cooled and sent to a high-pressure separator for the gas-liquid separation, and the separated gas was recycled, and the separated liquid was the hydrogenated heavy oil. During the reaction process, the reaction heat was removed by supplementing the cold hydrogen between the second and third catalyst beds in the reactor.

In the microchannel mixing component for preparing the hydrogen-carrying fluid, the sheets were made of stainless steel material and had a thickness of 1.0mm. Two layers of fiber filaments having a diameter of 1µm were filled between the crevice of the sheets, and were both nylon fiber filaments. The fiber filaments were evenly spaced with a spacing of 1µm. The fiber filament had a curve shape with periodic changes in wavy lines. The volume ratio of hydrogen gas (m³/h) to the oil (m³/h) of the hydrogen-carrying diesel in the microchannel device was 15: 1. The microchannel mixing conditions comprised: the temperature was 80°C, and the pressure was 15.4 MPaG. The volume flow ratio of hydrogen gas II (Nm³/h) and the heavy oil raw material (m³/h) was 470:1.

The heavy oil shown in Table 1-1 was used as the raw material and subjected to the hydrogenation reaction to produce the hydrogenation product. The reaction conditions and the product properties were shown in Table 1-2.

### Example 1-2

The heavy oil hydrogenation reaction system and the heavy oil hydrogenation process according to the present invention were used. Firstly, the heavy oil raw material and hydrogen gas II were introduced into the bottom and the side of the heavy oil hydrogenation reactor, respectively. Hydrogen gas II entered the shell space of the feeding mixer, and the heavy oil raw material entered the membrane dispersion tube bundle of the feeding mixer. Hydrogen gas II permeated and diffused into the membrane dispersion tube bundle under the drive of the pressure difference from the shell space, and was mixed with the heavy oil in the tube bundle to form a homogeneous phase before entering the first catalyst bed for the hydrogenation reaction. The heavy oil hydrogenation reactor was divided into three beds. From bottom to top, the first catalyst bed was filled with the hydrogenation protectant, the second catalyst bed was filled with the hydrodemetallization agent (60v%) and the hydrodesulfurization agent (40v%), and the third bed was filled with the hydrodesulfurization agent (40v%) and the hydrodenitrogenation agent (60v%).

Refined diesel as diluent oil and hydrogen gas I were mixed through pipeline, and then entered the microchannel mixing device. Through the crevice between microchannel sheets in the microchannel component, the material was continuously cut multiple times by oleophilic and/or hydrophilic fiber filaments filled in the crevice, forming a hydrogen-carrying fluid containing a large number of micron-sized hydrogen particles, which was supplemented between the first and second catalyst beds and between the second and third catalyst beds of the heavy oil hydrogenation reactor as the first hydrogen-carrying fluid and the second hydrogen-carrying fluid respectively, and then uniformly distributed along the downward direction of the cross-section of the reactor under the action of the hydrogen-carrying fluid distribution components in the catalyst beds, and performed the counter-flow/cross-flow contact with the reaction material flowing upward in the reactor for the mass transfer. After the completion of the hydrogenation reaction, the reaction product was cooled and sent to a high-pressure separator for the gas-liquid separation, and the separated gas was recycled, and the separated liquid was the hydrogenated heavy oil. During the reaction process, the reaction heat was removed by supplementing the cold hydrogen between the second and third catalyst beds in the reactor.

In the microchannel mixing component for preparing the hydrogen-carrying fluid, the sheets were made of stainless steel material and had a thickness of 1.0mm. Three layers of fiber filaments having a diameter of 1µm were filled between the crevice of the sheets, wherein two layers were made of polyester fiber filaments and one layer was made of nylon fiber filaments. The fiber filaments were evenly spaced with a spacing of 1µm. The fiber filament had a curve shape with periodic changes in wavy lines. The volume ratio of hydrogen gas (m³/h) to the oil (m³/h) of the hydrogen-carrying diesel in the microchannel device was 15: 1. The microchannel mixing conditions comprised: the temperature was 80°C, and the pressure was 14.2 MPaG. The volume flow ratio of hydrogen gas II (Nm³/h) and the heavy oil raw material (m³/h) was 390:1.

The heavy oil shown in Table 1-1 was used as the raw material and subjected to the hydrogenation reaction to produce the hydrogenation product. The reaction conditions and the product properties were shown in Table 1-2.

### Example 1-3

The heavy oil hydrogenation reaction system and the heavy oil hydrogenation process according to the present invention were used. Firstly, the heavy oil raw material and hydrogen gas II were introduced into the bottom and the side of the heavy oil hydrogenation reactor, respectively. Hydrogen gas II entered the shell space of the feeding mixer, and the heavy oil raw material entered the membrane dispersion tube bundle of the feeding mixer. Hydrogen gas II permeated and diffused into the membrane dispersion tube bundle under the drive of the pressure difference from the shell space, and was mixed with the heavy oil in the tube bundle to form a homogeneous phase before entering the first catalyst bed for the hydrogenation reaction. The heavy oil hydrogenation reactor was divided into four beds. From bottom to top, the first bed was filled with the hydrogenation protectant, the second bed was filled with the hydrodemetallization agent, the third bed was filled with the hydrodesulfurization agent, and the fourth bed was filled with the hydrodenitrogenation agent.

In this example, the residual oil raw material as diluent oil and hydrogen gas I were mixed through pipeline, and then entered the microchannel mixing device. Through the crevice between microchannel sheets in the microchannel component, the material was continuously cut multiple times by oleophilic and/or hydrophilic fiber filaments filled in the crevice, forming a hydrogen-carrying fluid containing a large number of micron-sized hydrogen particles, which was supplemented between the first and second catalyst beds and between the third and fourth catalyst beds of the heavy oil hydrogenation reactor as the first hydrogen-carrying fluid and the second hydrogen-carrying fluid respectively, and then uniformly distributed along the downward direction of the cross-section of the reactor under the action of the hydrogen-carrying fluid distribution components in the catalyst beds, and performed the counter-flow/cross-flow contact with the reaction material flowing upward in the reactor for the mass transfer. After the completion of the hydrogenation reaction, the reaction product was cooled and sent to a high-pressure separator for the gas-liquid separation, and the separated gas was recycled, and the separated liquid was the hydrogenated heavy oil. During the reaction process, the reaction heat was removed by supplementing the cold hydrogen between the second and third catalyst beds in the reactor.

In the microchannel mixing component for preparing the hydrogen-carrying fluid, the sheets were made of stainless steel material and had a thickness of 1.2mm. Four layers of fiber filaments having a diameter of 1µm were filled between the crevice of the sheets, wherein two layers were made of polyester fiber filaments, one layer was made of nylon fiber filaments and one layer was made of polypropylene fiber filaments. The fiber filaments were evenly spaced with a spacing of 1µm. The fiber filament had a curve shape with periodic changes in wavy lines. The volume ratio of hydrogen gas (m³/h) to the oil (m³/h) of the hydrogen-carrying fluid in the microchannel device was 30:1. The microchannel mixing conditions comprised: the temperature was 120°C, and the pressure was 13.6 MPaG. The volume flow ratio of hydrogen gas II (Nm³/h) and the heavy oil raw material (m³/h) was 400:1.

The heavy oil shown in Table 1-1 was used as the raw material and subjected to the hydrogenation reaction to produce the hydrogenation product. The reaction conditions and the product properties were shown in Table 1-2.

**Table 1-2 reaction conditions**

| No. | | Temperature, °C | Hydrogen partial pressure, MPaG | Space velocity, h⁻¹ | Sulfur, wt% | Nitrogen, µg/g | Residual Carbon, wt% | Metal, µg/g | Operation time, h |
|---|---|---|---|---|---|---|---|---|---|
| 1 | Comparative Example 1-1 | 373-390 | 16.4 | 0.28 | 0.32 | 1422 | 4.31 | 22.4 | 128 |
| 2 | Comparative Example 1-2 | 375-392 | 17.2 | 0.28 | 0.29 | 1385 | 4.17 | 17.5 | 153 |
| 3 | Example 1-1 | 368-381 | 14.6 | 0.32 | 0.14 | 765 | 1.55 | 6.3 | 558 |
| 4 | Example 1-2 | 362-380 | 14.2 | 0.29 | 0.14 | 668 | 1.54 | 6.8 | 580 |
| 5 | Example 1-3 | 370-383 | 14.0 | 0.28 | 0.11 | 654 | 1.48 | 5.3 | 652 |

Those skilled in the art know very well that in the conventional dispersion and mixing process of dispersed and continuous phases, the goal is to evenly mix the dispersed and continuous phases, and disperse the dispersed phase into smaller and more uniform particles. The dispersion and mixing effect can be measured by using a high-speed camera to obtain the particle size of the dispersed phase, and by selecting several characteristic particles to obtain the particle uniformity of the dispersed phase. The smaller the particle size of the dispersed phase, the higher the uniformity of dispersed phase particles, the better the dispersion and mixing effect. For the convenience of identification and measurement, different colored tracers can also be selected to replace the dispersed phase. Therefore, the measurement method for the mixing and dispersion effect of the microchannel mixer in the above examples is to mix the dispersed phase and the continuous phase by using different mixing and dispersion methods (such as conventional static mixer and microchannel mixer) under the same conditions. For each method, at least 10 sets of mixed material samples are obtained, and the UK IX i-SPEED 5 high-speed camera is used to capture the particle size of the dispersed phase in the mixed material samples. The dispersed phase particles in the photo are summed, the percentage contents of the particles of various sizes are calculated to obtain the normal distribution diagram of particles of various sizes, and then obtain the particle uniformity.

From the hydrogenation effects of the above examples and comparative examples, it could be seen that according to the process of the present invention, the hydrogen-carrying fluid prepared by the microchannel mixing device was introduced into the heavy oil hydrogenation reactor, uniformly distributed through the downward distribution component, and underwent the counter-flow/cross-flow contact with the upward materials in the reactor for the mass transfer, which had a good improvement effect on the hydrogenation reaction rate and the carbon deposition and coking of the catalyst. This was mainly due to the fact that the microchannel mixing device for preparing the hydrogen-carrying fluids of the present invention could produce hydrogen-carrying fluids with small particle sizes, high dispersion uniformity, and relatively stable existence states (according to the tests, the particle size of the dispersed phase in the hydrogen-carrying fluid in the examples was 20-600µm, and the dispersion uniformity was >_ 80%). This could significantly increase the two-phase mass transfer area, eliminate the mass transfer reaction resistance, and maintain a relatively high mass transfer reaction rate. It could be seen from the heavy oil hydrogenation reaction process in the examples of the present invention that compared with the existing technologies, on the one hand, more mild conditions could be used, such as lower temperature and pressure, higher space velocity, and lower hydrogen-to-oil ratio, to achieve better hydrogenation conversion effect. On the other hand, the carbon deposition and coking of the catalyst was significantly improved, and the catalyst operation cycle was significantly extended while achieving the same hydrogenation reaction effect, and the operation costs were significantly reduced.

Figure 2 is taken as an example to illustrate the application process of the heavy oil hydrogenation reaction system and the heavy oil hydrogenation process of the present invention:
Firstly, the heavy oil raw material 201 and hydrogen gas III 202 are mixed and introduced into the bottom of the heavy oil hydrogenation reactor 217; the diluted oil 204 and hydrogen gas I 205 are mixed through pipeline(s), and the mixture is introduced into the microchannel mixer 206 as the inlet material of the microchannel mixing device. During this process, the material enters the crevice 209 between the microchannel sheets 208 provided in the microchannel mixing component 207. The material is continuously cut multiple times by oleophilic and/or hydrophilic fiber filaments 210 filled in the crevice 209, forming a hydrogen-carrying fluid containing a large number of micron-sized hydrogen gas bubbles, which is supplemented to the upper parts of the first micro-mixing zone 225, the second micro-mixing zone 229, and the third micro-mixing zone 233 in the heavy oil hydrogenation reactor 217 as the first hydrogen-carrying fluid 218, the second hydrogen-carrying fluid 219, and the third hydrogen-carrying fluid 220 respectively, uniformly distributed along the downward direction of the cross-section of the reactor under the distribution effects of the first hydrogen-carrying fluid distribution component 224, the second hydrogen-carrying fluid distribution component 228, the third hydrogen-carrying fluid distribution component 232; Hydrogen gas II enters the shell space 216 of the inorganic membrane hydrogen-oil disperser 214, and the heavy oil raw material II 212 enters the membrane tube bundle 215. Hydrogen gas II permeates and diffuses into the membrane dispersion tube bundle under the drive of the pressure difference from the shell space 216, and is mixed with the heavy oil in the tube bundle 215 to form a high hydrogen-containing mixed fluid before supplementing to the lower parts of the first micro-mixing zone 225, the second micro-mixing zone 229, and the third micro-mixing zone 233 in the heavy oil hydrogenation reactor 217 respectively as the first hydrogen-oil mixed fluid 221, the second hydrogen-oil mixed fluid 222, the third hydrogen-oil mixed fluid 223, and then uniformly distributed along the upwards direction of the cross-section of the reactor under the action of the first hydrogen-oil mixed fluid distribution component 226, the second hydrogen-oil mixed fluid distribution component 230, the third hydrogen-oil mixed fluid distribution component 234; in each micro-mixing zone, the downward hydrogen-carrying fluid undergoes the counter-flow/cross-flow contact with the upward high hydrogen-containing mixed fluid and the reaction feed for the mass transfer. During this process, the contact and the mass transfer enable the hydrogen gas in the hydrogen-carrying fluid to quickly diffuse to the periphery of the heavy oil molecules, forming a "hydrogen-rich gas-in-oil fluid" that enters the catalyst bed(s) for the reaction.

The process of the present invention is applied to the heavy oil hydrogenation reaction. The heavy oil raw material is vacuum residue from a certain factory, and the specific properties are shown in Table 2-1; The diluent oil is a straight-run diesel oil, and the specific properties are shown in Table 2-2. The protectant, the hydrodemetallization catalyst, the hydrodesulfurization catalyst, and the hydrodenitrogenation catalyst used in the heavy oil hydrogenation reaction are FZC-13B, FZC-28A, FZC-34BT, and FZC-41A from Fushun Petrochemical Research Institute, respectively.

**Table 2-1 Properties of heavy oil raw material vacuum residue**

| Item | Feedstock oil |
|---|---|
| Density, g/cm³ | 0.992 |
| Viscosity, mm²/s | 764.2 |
| carbon residue, wt% | 17.85 |
| Sulfur, wt% | 1.93 |
| Nitrogen, µg/g | 6587 |
| SARA analysis, wt% | |
| Saturates | 20.2 |
| Aromatics | 51.0 |
| Resin | 22.5 |
| Asphaltene | 6.2 |

**Table 2-2 Properties of diluent oil raw material straight-run diesel**

| Item | Feedstock oil |
|---|---|
| Density, g/cm³ | 0.835 |
| Viscosity, mm²/s | 764.2 |
| Sulfur, wt% | 0.63 |
| Nitrogen, µg/g | 106 |
| Distillation range, °C | 203 |
| IBP/5% | 237 |
| 10%/30% | 257/269 |
| 50%/70% | 290/301 |
| 90%/95% | 322/332 |
| EBP | 352 |

### Comparative Example 2-1

A conventional fixed bed heavy oil hydrogenation process was used. The heavy oil raw material and hydrogen gas were mixed. The mixture was heated by the heat-exchanging to the reaction temperature, and sent to the bottom of the heavy oil hydrogenation reactor, successively passed through a protectant bed, a demetallization catalyst bed, a desulfurization catalyst bed, and a denitrification catalyst bed, and then left the reactor after the completion of the hydrogenation. Cold hydrogen was injected between the reactor beds to remove the reaction heat. The hydrogenation reaction product was cooled and then sent to a high-pressure separator for the gas-liquid separation. The separated gas was recycled, and the separated liquid was a hydrogenated heavy oil.

The heavy oil (vacuum residue) shown in Table 2-1 was used as the raw material and subjected to the hydrogenation reaction to produce the hydrogenation product. The reaction conditions and the product properties were shown in Table 2-2.

### Example 2-1

The heavy oil hydrogenation reaction system and the hydrogenation process according to the present invention were used. First, the heavy oil raw material I and hydrogen gas III were mixed and introduced into the bottom of the heavy oil hydrogenation reactor.

The heavy oil hydrogenation reactor was divided into two beds. From bottom to top, the first bed was filled with the hydrogenation protectant (70v%) and the hydrodemetallization agent (30v%), and the second bed was filled with the hydrodesulfurization agent (50v%) and the hydrodenitrogenation agent (50v%).

Straight-run diesel oil shown in Table 2-2 as diluent oil and hydrogen gas I were mixed through pipeline, and then entered the microchannel mixing device. Through the crevice between microchannel sheets in the microchannel component, the material was continuously cut multiple times by oleophilic and/or hydrophilic fiber filaments filled in the crevice, forming a hydrogen-carrying fluid containing a large number of micron-sized hydrogen bubbles, which was introduced as the first hydrogen-carrying fluid and the second hydrogen-carrying fluid to the upper part of the first micro-mixing zone and the second micro-mixing zone of the heavy oil hydrogenation reactor, and uniformly distributed along the downward direction of the cross-section of the reactor through the first hydrogen-carrying fluid distribution component and the second hydrogen-carrying fluid distribution component respectively.

The heavy oil raw material II entered the membrane tube bundle of the inorganic membrane hydrogen-oil disperser, and hydrogen gas II entered the shell space of the inorganic membrane hydrogen-oil disperser, and permeated and diffused into the membrane dispersion tube bundle under the drive of the pressure difference from the shell space, and was mixed with the heavy oil in the tube bundle to form a high hydrogen-containing mixed fluid, which entered the lower part of the micro-mixing zone as the first high hydrogen-containing mixed fluid and the second high hydrogen-containing mixed fluid, and flowed upward and underwent the counter-flow/cross-flow contact with the first hydrogen-carrying fluid and the second hydrogen-carrying fluid and the reaction stream for the mass transfer. After the completion of the hydrogenation reaction, the reaction product was cooled and sent to a high-pressure separator for the gas-liquid separation. The separated gas was recycled, and the separated liquid was the hydrogenated heavy oil.

In the microchannel mixing component for preparing the hydrogen-carrying fluid, the sheets were made of stainless steel material and had a thickness of 1.0mm. One layer of polyester fiber filaments having a diameter of 1 µm was filled between the crevice of the sheets. The fiber filaments were evenly spaced with a spacing of 1µm. The fiber filament had a curve shape with periodic changes in wavy lines. The volume ratio of hydrogen gas I (m³/h) to the diluent oil (m³/h) in said hydrogen-carrying fluid was 30:1. The mixing conditions of the microchannel device comprised: the temperature was 60°C, and the pressure was 14.8 MPaG. The volume flow ratio of hydrogen gas II (Nm³/h) and the heavy oil raw material (m³/h) was 220:1. The volume flow ratio of hydrogen gas III (Nm³/h) and the heavy oil raw material (m³/h) was 340:1.

The heavy oil shown in Table 2-1 was used as the raw material and subjected to the hydrogenation reaction to produce the hydrogenation product. The reaction conditions and the product properties were shown in Table 2-3.

### Example 2-2

The heavy oil hydrogenation reaction system and the hydrogenation process according to the present invention were used. First, the heavy oil raw material I and hydrogen gas III were mixed and introduced into the bottom of the heavy oil hydrogenation reactor.

The heavy oil hydrogenation reactor was divided into three beds. From bottom to top, the first catalyst bed was filled with the hydrogenation protectant, the second catalyst bed was filled with the hydrodemetallization agent (70v%) and the hydrodesulfurization agent (30v%), and the third bed was filled with the hydrodesulfurization agent (50v%) and the hydrodenitrogenation agent (50v%).

Straight-run diesel oil shown in Table 2-2 as diluent oil and hydrogen gas I were mixed through pipeline, and then entered the microchannel mixing device. Through the crevice between microchannel sheets in the microchannel component, the material was continuously cut multiple times by oleophilic and/or hydrophilic fiber filaments filled in the crevice, forming a hydrogen-carrying fluid containing a large number of micron-sized hydrogen particles, which was introduced as the first hydrogen-carrying fluid, the second hydrogen-carrying fluid, and the third hydrogen-carrying fluid to the upper part of the first micro-mixing zone, the second micro-mixing zone and the third micro-mixing zone of the heavy oil hydrogenation reactor, and uniformly distributed along the downward direction of the cross-section of the reactor through the first hydrogen-carrying fluid distribution component, the second hydrogen-carrying fluid distribution component and the third hydrogen-carrying fluid distribution component respectively.

The heavy oil raw material II entered the membrane tube bundle of the inorganic membrane hydrogen-oil disperser, and hydrogen gas II entered the shell space of the inorganic membrane hydrogen-oil disperser, and permeated and diffused into the membrane dispersion tube bundle under the drive of the pressure difference from the shell space, and was mixed with the heavy oil in the tube bundle to form a high hydrogen-containing mixed fluid, which entered the lower part of the micro-mixing zone, flowed upward as the first high hydrogen-containing mixed fluid, the second high hydrogen-containing mixed fluid, the third high hydrogen-containing mixed fluid, and underwent the counter-flow/cross-flow contact with the first hydrogen-carrying fluid, the second hydrogen-carrying fluid, the third hydrogen-carrying fluid and the reaction stream for the mass transfer. After the completion of the hydrogenation reaction, the reaction product was cooled and sent to a high-pressure separator for the gas-liquid separation. The separated gas was recycled, and the separated liquid was the hydrogenated heavy oil.

In the microchannel mixing component for preparing the hydrogen-carrying fluid, the sheets were made of stainless steel material and had a thickness of 1.0mm. Three layers of fiber filaments having a diameter of 1µm were filled between the crevice of the sheets, wherein one layer was made of polyester fiber filaments and two layers were made of nylon fiber filaments. The fiber filaments were evenly spaced with a spacing of 1µm. The fiber filament had a curve shape with periodic changes in wavy lines. The volume ratio of hydrogen gas I (m³/h) to the diluent oil (m³/h) in said hydrogen-carrying fluid was 20: 1. The mixing conditions of the microchannel device comprised: the temperature was 70°C, and the pressure was 14.0 MPaG. The volume flow ratio of hydrogen gas II (Nm³/h) and the heavy oil raw material (m³/h) was 180:1. The volume flow ratio of hydrogen gas III (Nm³/h) and the heavy oil raw material (m³/h) was 350:1.

The heavy oil shown in Table 2-1 was used as the raw material and subjected to the hydrogenation reaction to produce the hydrogenation product. The reaction conditions and the product properties were shown in Table 2-2.

### Example 2-3

The heavy oil hydrogenation reaction system and the hydrogenation process according to the present invention were used. First, the heavy oil raw material I and hydrogen gas III were mixed and introduced into the bottom of the heavy oil hydrogenation reactor.

The heavy oil hydrogenation reactor was divided into four beds. From bottom to top, the first catalyst bed was filled with the hydrogenation protectant, the second catalyst bed was filled with the hydrodemetallization agent, the third catalyst bed was filled with the hydrodesulfurization agent, and the fourth catalyst bed was filled with the hydrodenitrogenation agent.

Straight-run diesel shown in Table 2-2 as diluent oil and hydrogen gas I were mixed through pipeline, and then entered the microchannel mixing device. Through the crevice between microchannel sheets in the microchannel component, the material was continuously cut multiple times by oleophilic and/or hydrophilic fiber filaments filled in the crevice, forming a hydrogen-carrying fluid containing a large number of micron-sized hydrogen particles, which was introduced as the first hydrogen-carrying fluid, the second hydrogen-carrying fluid, the third hydrogen-carrying fluid, and the fourth hydrogen-carrying fluid to the upper part of the first micro-mixing zone, the second micro-mixing zone, the third micro-mixing zone, and the fourth micro-mixing zone of the heavy oil hydrogenation reactor, and uniformly distributed along the downward direction of the cross-section of the reactor through the first hydrogen-carrying fluid distribution component, the second hydrogen-carrying fluid distribution component, the third hydrogen-carrying fluid distribution component, and the fourth hydrogen-carrying fluid distribution component respectively.

The heavy oil raw material II entered the membrane tube bundle of the inorganic membrane hydrogen-oil disperser, and hydrogen gas II entered the shell space of the inorganic membrane hydrogen-oil disperser, and permeated and diffused into the membrane dispersion tube bundle under the drive of the pressure difference from the shell space, and was mixed with the heavy oil in the tube bundle to form a high hydrogen-containing mixed fluid, which entered the lower part of the micro-mixing zone, flowed upward as the first high hydrogen-containing mixed fluid, the second high hydrogen-containing mixed fluid, the third high hydrogen-containing mixed fluid, and the fourth high hydrogen-containing mixed fluid, and underwent the counter-flow/cross-flow contact with the first hydrogen-carrying fluid, the second hydrogen-carrying fluid, the third hydrogen-carrying fluid, the fourth hydrogen-carrying fluid and the reaction stream for the mass transfer. After the completion of the hydrogenation reaction, the reaction product was cooled and sent to a high-pressure separator for the gas-liquid separation. The separated gas was recycled, and the separated liquid was the hydrogenated heavy oil.

In the microchannel mixing component for preparing the hydrogen-carrying fluid, the sheets were made of stainless steel material and had a thickness of 1.2mm. Four layers of fiber filaments having a diameter of 1µm were filled between the crevice of the sheets, wherein two layers were made of nylon fiber filaments and two layers were made of polypropylene fiber filaments. The fiber filaments were evenly spaced with a spacing of 1µm. The fiber filament had a curve shape with periodic changes in wavy lines.

The mixing conditions of the microchannel device comprised: the temperature was 90°C, and the pressure was 13.2 MPaG. The volume flow ratio of hydrogen gas I (Nm³/h) and the heavy oil raw material (m³/h) was 40: 1. The volume flow ratio of hydrogen gas II (Nm³/h) and the heavy oil raw material (m³/h) was 250:1. The volume flow ratio of hydrogen gas III (Nm³/h) and the heavy oil raw material (m³/h) was 200:1.

The heavy oil shown in Table 2-1 was used as the raw material and subjected to the hydrogenation reaction to produce the hydrogenation product. The reaction conditions and the product properties were shown in Table 2-2.

**Table 2-2 Reaction conditions**

| No. | | Temperature, °C | Hydrogen partial pressure, MPaG | Space velocity, h⁻¹ | Sulfur, wt% | Nitrogen, µg/g | Residual carbon, wt% | Metal, µg/g | Operation time, h |
|---|---|---|---|---|---|---|---|---|---|
| 1 | Comparative Example 2-1 | 375-390 | 16.5 | 0.25 | 0.30 | 1420 | 4.24 | 22.1 | 125 |
| 2 | Comparative Example 2-2 | 375-393 | 17.2 | 0.25 | 0.28 | 1388 | 4.12 | 17.8 | 156 |
| 3 | Example 2-1 | 360-378 | 14.2 | 0.35 | 0.12 | 565 | 1.52 | 6.0 | 658 |
| 4 | Example 2-2 | 362-380 | 13.7 | 0.38 | 0.10 | 446 | 1.44 | 5.8 | 694 |
| 5 | Example 2-3 | 360-377 | 13.5 | 0.40 | 0.10 | 454 | 1.43 | 5.5 | 708 |

Those skilled in the art know very well that in the conventional dispersion and mixing process of dispersed and continuous phases, the goal is to evenly mix the dispersed and continuous phases (the dispersed phase: hydrogen gas, the continuous phase: the heavy oil raw material according to the present invention), and disperse the dispersed phase into smaller and more uniform particles. The dispersion and mixing effect can be measured by using a high-speed camera to obtain the particle size of the dispersed phase, and by selecting several characteristic particles to obtain the particle uniformity of the dispersed phase. The smaller the particle size of the dispersed phase, the higher the uniformity of dispersed phase particles, the better the dispersion and mixing effect. For the convenience of identification and measurement, different colored tracers can also be selected to replace the dispersed phase. Therefore, the measurement method for the mixing and dispersion effect of the microchannel mixer in the above examples is to mix the dispersed phase and the continuous phase by using different mixing and dispersion methods (such as conventional static mixer and microchannel mixer) under the same conditions. For each method, at least 10 sets of mixed material samples are obtained, and the UK IX i-SPEED 5 high-speed camera is used to capture the particle size of the dispersed phase in the mixed material samples. The dispersed phase particles in the photo are summed, the percentage contents of the particles of various sizes are calculated to obtain the normal distribution diagram of particles of various sizes, and then obtain the particle uniformity.

From the hydrogenation effects of the above examples and comparative examples, it could be seen that according to the process of the present invention, the hydrogen-carrying fluid and the high hydrogen-containing mixed fluid were introduced into the micro-mixing zone of the heavy oil hydrogenation reactor respectively so that the hydrogen-carrying fluid was uniformly distributed through the downward distribution component, and underwent the counter-flow/cross-flow contact with the high hydrogen-containing mixed fluid and the upward materials in the reactor for the mass transfer, forming a "hydrogen-rich gas-in-oil fluid" before entering the catalyst bed(s) for the hydrogenation reaction. The process of the present invention had a good improvement effect on the hydrogenation reaction rate, the reaction conversion depth, the reaction uniformity, and the carbon deposition and coking on the catalyst. This was mainly due to the uniform dispersion of a large amount of hydrogen gas in the high hydrogen-containing mixed fluid. When in contact with the reaction feed, the reaction feed might also contain a large amount of dispersed hydrogen, and came into contact with the hydrogen-carrying fluid again. Since the hydrogen gas in the hydrogen-carrying fluid had a small size and high dispersion uniformity (according to the tests, the particle size of the dispersed phase in the hydrogen-carrying fluid in the examples was 10-600µm, and the dispersion uniformity was >_ 80%), and existed stably and was in the homogeneous phase, when it came into contact with the bottom-up material, a "hydrogen-rich gas-in-oil fluid" could be quickly formed, which allowed a large number of stable hydrogen microbubbles to be wrapped and dispersed inside the liquid phase of the reaction material, thereby guaranteeing that the catalyst surface was always in a hydrogen-rich state, increasing the hydrogenation reaction rate and the conversion depth, greatly inhibiting the carbon deposition and coking on the catalyst surface, and making the reaction more uniform. It could be seen from the heavy oil hydrogenation reaction process in the examples of the present invention that compared with the existing technologies, on the one hand, more mild conditions could be used, such as lower temperature and pressure, higher space velocity, and lower hydrogen-to-oil ratio, to achieve better hydrogenation conversion effect. On the other hand, the carbon deposition and coking of the catalyst was significantly improved, and the catalyst operation cycle was significantly extended while achieving the same hydrogenation reaction effect, and the operation costs were significantly reduced.

Additionally, the present invention also provides the undermentioned technical solutions:
A1. A heavy oil hydrogenation reaction system, which is characterized in that: it includes a micro-mixing zone and a heavy oil hydrogenation reaction zone, wherein the micro-mixing zone is used for the mixing of a diluent oil and hydrogen to obtain a hydrogen-carrying fluid, and the micro-mixing zone includes at least one microchannel mixer; said microchannel mixer comprises a microchannel component and a shell, wherein the microchannel component is fixed inside the shell, wherein an inlet is provided at one end of the shell for feeding a diluent oil and hydrogen gas, and an outlet is provided at the other end for discharging a hydrogen-carrying fluid; said microchannel component comprises multiple stacked sheets and several layers of oleophilic and/or hydrophilic fiber filaments filled in the crevices between adjacent sheets, wherein the fiber filaments form several microchannels between them, and the fiber filaments are clamped and fixed by the sheets; said heavy oil hydrogenation reaction zone includes at least one heavy oil hydrogenation reactor, in which one or more catalyst beds are arranged, and a hydrogen-carrying fluid distribution component is arranged above at least one catalyst bed, a feeding mixer is arranged at the bottom of each reactor; said hydrogen-carrying fluid distribution component is communicated with the outlet of the microchannel mixer through pipeline.
A2. The system according to technical solution A1, which is characterized in that: when multiple catalyst beds are arranged, a hydrogen-carrying fluid distribution component is arranged above any of the catalyst beds.
A3. The system according to technical solution A1, which is characterized in that: the microchannel component in the shell of the microchannel mixer is divided into a feeding end and a discharging end along the direction of the crevice, wherein a feeding distribution space is provided between the inlet and the feeding end, and a discharging distribution space is provided between the outlet and the discharging end, in order to prevent the short circuit of materials and guarantee the materials flowing from the feeding end to the discharging end within the microchannel component, except for the feeding end and the discharging end, all other ends of the microchannel component are connected to the shell in a sealed manner.
A4. The system according to technical solution A1, which is characterized in that: said fiber filaments can be arranged in single or multiple layers, preferably 1-50 layers, and more preferably 1-5 layers.
A5. The system according to technical solution A1, which is characterized in that: when said fiber filaments are arranged in multiple layers, the projection of two adjacent layers of fiber filaments along the vertical direction of the sheets forms a mesh structure.
A6. The system according to technical solution A1, which is characterized in that: in any layer of fiber filaments, the distance between adjacent fiber filaments is 0.5µm-50µm, preferably arranged at equal intervals; and the fiber filaments are arranged along any of the transverse, longitudinal or oblique direction of the surface of the sheet.
A7. The system according to technical solution A1, which is characterized in that: said fiber filament has an arbitrary curve shape, preferably a periodically changing curve shape.
A8. The system according to technical solution A1, which is characterized in that: the fiber filaments in the same layer have the same shape, and preferably, the fiber filaments in all layers have the same shape.
A9. The system according to technical solution A1, which is characterized in that: said fiber filaments have a diameter of 0.5-50µm, preferably 0.5-5µm, more preferably 0.5-1µm.
A10. The system according to technical solution A1, which is characterized in that: said lipophilic fiber filament is at least one of a polyester fiber filament, a nylon fiber filament, a polyurethane fiber filament, a polypropylene fiber filament, a polyacrylonitrile fiber filament, a polyvinyl chloride fiber filament, or an oleophilically surface-treated fiber filament material.
A11. The system according to technical solution A1, which is characterized in that: said hydrophilic fiber filament is selected from one or more of a high molecular polymer containing at least one hydrophilic group in its main chain or side chain or a fiber filament that has been hydrophilically treated with a physical or chemical method.
A12. The system according to technical solution A1, which is characterized in that: said hydrophilic fiber filament is selected from one or more of polypropylene fiber, polyamide fiber or acrylic fiber.
A13. The system according to technical solution A1, which is characterized in that: the crevices between said adjacent sheets are filled with the lipophilic and hydrophilic fiber filaments in a certain proportion, preferably in a filling ratio by weight of 1:50-50:1.
   The system according to technical solution A1, which is characterized in that: said sheet has a thickness of 0.05mm-5mm, preferably 0.1-1.5mm.
A14. The system according to technical solution A1, which is characterized in that: the sheet is of any one or more of metal, ceramics, organic glass, or polyester material.
A15. The system according to technical solution A1, which is characterized in that: the mode of feeding at a lower position is adopted for said heavy oil hydrogenation reactor.
A16. The system according to technical solution A1, which is characterized in that: said feeding mixer adopts a tube-shell type ceramic membrane tube assembly, the heavy oil feeding pipeline is communicated with the ceramic membrane tube side, and the hydrogen pipeline is communicated with the cavity in the shell outside of the ceramic membrane tube. The ceramic membrane tube is arranged along the axial direction of the reactor, and hydrogen diffuses outward through the wall of the ceramic membrane tube to form micron-sized bubbles with a size of 10µm-1mm.
A17. The system according to technical solution A1, which is characterized in that: said hydrogen-carrying fluid distribution component is in the form of tube, disc, jet, or branch, with the distribution holes and/or slits of said hydrogen-carrying fluid distribution component directing downwards so as to achieve the counter-flow or cross-flow contact with the upward-flowing material(s) in the reactor.
A18. The system according to technical solution A1, which is characterized in that: micrometer sized bubbles in the hydrogen-carrying fluid formed in said microchannel mixer have a size of 0.5-900µm, preferably 0.5-50µm.
A19. The system according to technical solution A1, which is characterized in that: micrometer sized bubbles in the hydrogen-carrying fluid formed in said microchannel mixer have a disperse uniformity of ≥80%.
A20. The system according to technical solution A1, which is characterized in that: 2-10 catalyst beds are arranged.
A21. The system according to technical solution A1, which is characterized in that: cold hydrogen gas pipeline(s) is/are arranged between the catalyst beds.
A22. The system according to technical solution A1, which is characterized in that: the hydrogen used in the micro-mixing zone and the hydrogen used in the heavy oil hydrogenation reaction zone are a fresh hydrogen gas or a recycled hydrogen gas, preferably a fresh hydrogen gas having a purity of greater than 90 vol% or a recycled hydrogen gas having a purity of greater than 85 vol%.
A23. A heavy oil hydrogenation reaction process, which is characterized in that: the heavy oil hydrogenation process comprises: (1) in the micro-mixing zone, a diluent oil and hydrogen gas I enter the microchannel mixer, and the resulting mixture flows through the microchannels between fiber filaments in the microchannel component, and is successively cut multiple times by the fiber filaments, forming a hydrogen-carrying fluid containing a large number of micron-sized particles; (2) in the heavy oil hydrogenation reaction zone, a heavy oil raw material and hydrogen gas II enter the feeding mixer from the bottom of the heavy oil hydrogenation reactor, and the resulting mixed material enters the catalyst bed(s) from bottom to top; at the same time, the hydrogen-carrying fluid from the micro-mixing zone enters the catalyst bed(s) from top to bottom, and the two reaction streams come into contact for the hydrogenation reaction; the reaction product flows out from the top of the heavy oil hydrogenation reactor.
A24. The process according to technical solution A23, which is characterized in that: said hydrogen-carrying fluid is a diluent oil carrying a large number of small hydrogen gas bubbles; the volume flow ratio of hydrogen gas (Nm³/h) to the diluent oil (m³/h) in said hydrogen-carrying fluid is 300:1 to 1:1, preferably 50:1 to 5:1.
A25. The process according to technical solution A23, which is characterized in that: said hydrogen-carrying fluid is divided into multiple streams, preferably 2-4 streams along the axial direction of the reactor to enter the catalyst beds, the flow rate of each stream of the hydrogen-carrying fluid gradually increases from bottom to top along the axial direction of the reactor.
A26. The process according to technical solution A23, which is characterized in that: the mixing conditions of said micro-mixing zone comprise: the temperature is 50-380°C, and the pressure is 10.0-20.0 MPaG.
A27. The process according to technical solution A23, which is characterized in that: the micron-sized bubbles in said hydrogen-carrying fluid have a disperse uniformity of ≥80%.
A28. The process according to technical solution A23, which is characterized in that: said diluent oil is one or more of crude oil, gasoline, kerosene, diesel, atmospheric residue, vacuum residue, gas oil, deasphalted oil, coal tar oil, lubricating oil or anthracene oil.
A29. The process according to technical solution A23, which is characterized in that: the conditions of the heavy oil hydrogenation reaction comprise: the temperature is 350-480°C, the pressure is 10-20.0 MPaG, the space velocity is 0.2-1.0 h⁻¹, and the hydrogen/oil volume ratio is 500:1-1500:1; the operation conditions of the feeding mixer at the bottom of the reactor are identical to the conditions of the hydrogenation reaction.
A30. The process according to technical solution A23, which is characterized in that: said heavy oil is selected from one or more of atmospheric residue, vacuum residue, cracked residue, cracked diesel oil, catalytic diesel, vacuum gas oil or deasphalted oil.
B1. A heavy oil hydrogenation reaction system, which is characterized in that it includes a hydrogen-carrying fluid formation zone, a high hydrogen-containing mixed fluid formation zone, and a heavy oil hydrogenation reaction zone; said hydrogen-carrying fluid formation zone comprises at least one microchannel mixer, said microchannel mixer comprises a microchannel component and a shell, wherein the microchannel component is fixed inside the shell, wherein an inlet is provided at one end of the shell for feeding a diluent oil and hydrogen gas, and an outlet is provided at the other end for discharging a hydrogen-carrying fluid; said microchannel component comprises multiple stacked sheets and several layers of oleophilic and/or hydrophilic fiber filaments filled in the crevices between adjacent sheets, wherein the fiber filaments form several microchannels between them, and the fiber filaments are clamped and fixed by the sheets;
   said high hydrogen-containing mixed fluid formation zone includes at least one inorganic membrane hydrogen-oil disperser, the inorganic membrane hydrogen-oil disperser has a tube-shell type structure containing inorganic membrane tube components, and there is a bundle of inorganic membrane tubes in the interior of the shell, a heavy oil raw material pipeline is communicated with the inlet end of the bundle of inorganic membrane tubes, a hydrogen pipeline is communicated with the shell space; hydrogen gas diffuses into the bundle of inorganic membrane tubes through the inorganic membrane tube wall to form a high hydrogen-containing mixed fluid with the heavy oil raw material, the outlet end of the bundle of inorganic membrane tubes is the outlet of the high hydrogen-containing mixed fluid; said heavy oil hydrogenation reaction zone includes at least one heavy oil hydrogenation reactor, in which one or more catalyst beds are arranged, and a micro-mixing zone is arranged below at least one catalyst bed, a hydrogen-carrying fluid distribution component is located at the top of said micro-mixing zone, and a high hydrogen-containing mixed fluid distribution component is located at the bottom; said hydrogen-carrying fluid distribution component is communicated with the material outlet of the microchannel mixer through pipeline, said high hydrogen-containing mixed fluid distribution component is communicated with the material outlet of the inorganic membrane hydrogen-oil disperser.
B2. The system according to technical solution B1, which is characterized in that: in the hydrogen-carrying fluid formation zone, the microchannel component in the shell of the microchannel mixer is divided into a feeding end and a discharging end along the direction of the crevice, wherein a feeding distribution space is provided between the material inlet and the feeding end, and a discharging distribution space is provided between the material outlet and the discharging end, except for the feeding end and the discharging end, all other ends of the microchannel component are connected to the shell in a sealed manner.
B3. The system according to technical solution B1, which is characterized in that: said fiber filaments are arranged in single or multiple layers, preferably 1-50 layers, and more preferably 1-5 layers.
B4. The system according to technical solution B1, which is characterized in that: when said fiber filaments are arranged in multiple layers, the projection of two adjacent layers of fiber filaments along the vertical direction of the sheets forms a mesh structure.
B5. The system according to technical solution B1 or B4, which is characterized in that: in each layer of fiber filaments, the distance between adjacent fiber filaments is 0.5µm-50µm, preferably arranged at equal intervals.
B6. The system according to technical solution B1 or B4, which is characterized in that: the fiber filaments are arranged along any of the transverse, longitudinal or oblique direction of the surface of the sheet.
B7. The system according to technical solution B1 or B4, which is characterized in that: the fiber filaments have a periodically changing curve shape, preferably the fiber filaments in the same layer have the same shape, and more preferably, the fiber filaments in all layers have the same shape.
B8. The system according to technical solution B1 or B4, which is characterized in that: said fiber filaments have a diameter of 0.5-50µm, preferably 0.5-5µm, more preferably 0.5-1µm.
B9. The system according to technical solution B1, which is characterized in that: said lipophilic fiber filament is at least one of a polyester fiber filament, a nylon fiber filament, a polyurethane fiber filament, a polypropylene fiber filament, a polyacrylonitrile fiber filament, a polyvinyl chloride fiber filament, or an oleophilically surface-treated fiber filament material.
B10. The system according to technical solution B1, which is characterized in that: said hydrophilic fiber filament is selected from one or more of a high molecular polymer containing at least one hydrophilic group in its main chain or side chain or a fiber filament that has been hydrophilically treated with a physical or chemical method.
B11. The system according to technical solution B1, which is characterized in that: the crevices between said adjacent sheets are wholly filled with any one of the lipophilic or hydrophilic fiber filament; or alternatively, the lipophilic and hydrophilic fiber filaments are filled in a certain proportion.
B12. The system according to technical solution B1 or B11, which is characterized in that: the lipophilic and hydrophilic fiber filaments are filled with a filling ratio by weight of 1:50-50:1.
B13. The system according to technical solution B1, which is characterized in that: said sheet has a thickness of 0.05mm-5mm; the sheet is of any one or more of metal, ceramics, organic glass, or polyester material; the shape of the sheet is any one of rectangle, square, polygon, circle, ellipse, or sector.
B14. The system according to technical solution B1, which is characterized in that: micrometer sized bubbles in the hydrogen-carrying fluid formed in said microchannel mixer have a size of 0.5-900µm, preferably 0.5-50µm.
B15. The system according to technical solution B14, which is characterized in that: micrometer sized bubbles in the hydrogen-carrying fluid have a disperse uniformity of≥80%.
B16. The system according to technical solution B1, which is characterized in that: when multiple catalyst beds are arranged in said heavy oil hydrogenation reaction zone, a micro-mixing zone is arranged below any of the catalyst beds.
B17. The system according to technical solution B1, which is characterized in that: 2-10 catalyst beds are arranged in said heavy oil hydrogenation reactor.
B18. The system according to technical solution B1, which is characterized in that: the mode of feeding at a lower position is adopted for said heavy oil hydrogenation reactor; said heavy oil raw material and hydrogen gas are pre-mixed with a mixing device before entering the reactor.
B19. The system according to technical solution B1, which is characterized in that: in the micro-mixing zone under said catalyst bed, the hydrogen-carrying fluid is introduced from the upper part, and the high hydrogen-containing mixed fluid is introduced from the lower part; said hydrogen-carrying fluid distribution component is in the form of tube, disc, jet, or branch; said high hydrogen-containing mixed fluid distribution component is in form of sieve plate with open pores, or grid; distribution holes and/or slits of said hydrogen-carrying fluid distribution component direct downward, distribution holes and/or slits of said high hydrogen-containing mixed fluid distribution component run through up and down; a "hydrogen-rich gas-in-oil fluid" is formed by means of the counter-flow or cross-flow contact of the downward-flowing hydrogen-carrying fluid and the upward-flowing high hydrogen-containing mixed fluid, and reaction feeds.
B20. A heavy oil hydrogenation process, which is characterized in that: the heavy oil hydrogenation process comprises: (1) a hydrogen-carrying fluid, containing a large number of micron-sized particles formed from a diluent oil and hydrogen gas I with the microchannel mixer in a hydrogen-carrying fluid formation zone, enters the upper part of the micro-mixing zone and flows downward; (2) a high hydrogen-containing mixed fluid, formed by dispersing a heavy oil raw material and hydrogen gas II with an inorganic membrane hydrogen-oil disperser in the high hydrogen-containing mixed fluid formation zone, enters the lower part of the micro-mixing zone and flows upward; (3) in the heavy oil hydrogenation reaction zone, a heavy oil raw material and hydrogen gas III enter the bottom of the heavy oil hydrogenation reactor and enter the micro-mixing zone from bottom to top, mix with the hydrogen-carrying fluid and/or the high hydrogen-containing mixed fluid and form a "hydrogen-rich gas-in-oil fluid", which enters the catalyst bed(s) for the hydrogenation reaction, and the hydrogenation reaction product flows out from the top of the reactor.
B21. The process according to technical solution B20, which is characterized in that: the volume flow ratio of hydrogen gas I (Nm³/h) to the diluent oil (m³/h) is 100:1 to 1:1; the mixing conditions of said microchannel mixer: the temperature is from normal temperature to 380°C, and the pressure is 10.0-20.0 MPaG.
B22. The process according to technical solution B20, which is characterized in that: said diluent oil is one or more of crude oil, gasoline, kerosene, diesel, atmospheric residue or gas oil.
B23. The process according to technical solution B20, which is characterized in that: the volume flow ratio of hydrogen gas II (Nm³/h) to the oil raw material (m³/h) is 1:1-500:1; the dispersing conditions of the inorganic membrane hydrogen-oil disperser: the temperature is from normal temperature to 380°C, and the pressure is 10.0-20.0 MPaG.
B24. The process according to technical solution B20, which is characterized in that: said heavy oil raw material is one or more of atmospheric residue, vacuum residue, cracked residue, cracked diesel oil, catalytic diesel, vacuum gas oil, deasphalted oil, coal tar oil, lubricating oil or anthracene oil.
B25. The process according to technical solution B20, which is characterized in that: said hydrogen-carrying fluid is divided into multiple streams, preferably 2-4 streams along the axial direction of the reactor to enter the micro-mixing zones, and said high hydrogen-containing mixed fluid is divided into multiple streams, preferably 2-4 streams along the axial direction of the reactor to enter the micro-mixing zones.
B26. The process according to technical solution B25, which is characterized in that: the stream number of the hydrogen-carrying fluid is identical to that of the high hydrogen-containing mixed fluid.
B27. The process according to technical solution B20, which is characterized in that: the volume flow ratio of hydrogen gas III (Nm³/h) to the heavy oil raw material (m³/h) is 10:1 to 800:1, preferably 50:1 - 300:1.
B28. The process according to technical solution B20, which is characterized in that: the conditions of the heavy oil hydrogenation reaction comprise the temperature is 320-480°C, the pressure is 10-20.0 MPaG, the space velocity is 0.1-1.0 h⁻¹, the hydrogen/oil volume ratio 100:1-1200:1.
B29. The process according to technical solution B20, which is characterized in that: the micro-mixing zone(s) of the heavy oil hydrogenation reactor is/are filled with an inert ceramic ball, or a protective agent with hydrogenation function; the catalyst bed(s) is/are filled with a conventional heavy oil hydrogenation catalyst.

## Claims

1. A microchannel mixer, comprising a microchannel component and a shell, wherein
the microchannel component is fixed inside the shell, wherein an inlet is provided at one end of the shell for feeding liquid and gas phase materials, and an outlet is provided at the other end for discharging the mixed material;
said microchannel component comprises multiple stacked sheets and several layers of oleophilic and/or hydrophilic fiber filaments filled in the crevices between adjacent sheets, wherein the fiber filaments form several microchannels between them, and the fiber filaments are clamped and fixed by the sheets.

2. The microchannel mixer according to any of the aforementioned claims, which is **characterized in that**: the microchannel component in the shell of the microchannel mixer is divided into a feeding end and a discharging end along the direction of the crevice, wherein a feeding distribution space is provided between the material inlet and the feeding end, and a discharging distribution space is provided between the material outlet and the discharging end, except for the feeding end and the discharging end, all other ends of the microchannel component are connected to the shell in a sealed manner.

3. The microchannel mixer according to any of the aforementioned claims, which is **characterized in that**: said fiber filaments can be arranged in single or multiple layers, preferably 1-50 layers, and more preferably 1-5 layers.

4. The microchannel mixer according to any of the aforementioned claims, which is **characterized in that**: when said fiber filaments are arranged in multiple layers, the projection of two adjacent layers of fiber filaments along the vertical direction of the sheets is presented as a mesh structure.

5. The microchannel mixer according to any of the aforementioned claims, which is **characterized in that**: in any layer, preferably, in each layer of fiber filaments, the distance between adjacent fiber filaments is 0.5µm-50µm, preferably arranged at equal intervals; and/or, the fiber filaments are arranged along any of the transverse, longitudinal or oblique direction of the surface of the sheet.

6. The microchannel mixer according to any of the aforementioned claims, which is **characterized in that**: said fiber filament has an arbitrary curve shape, preferably a periodically changing curve shape.

7. The microchannel mixer according to any of the aforementioned claims, which is **characterized in that**: the fiber filaments in the same layer have the same shape, and preferably, the fiber filaments in all layers have the same shape.

8. The microchannel mixer according to any of the aforementioned claims, which is **characterized in that**: said fiber filament has a diameter of 0.5-50µm, preferably 0.5-5µm, more preferably 0.5-1µm.

9. The microchannel mixer according to any of the aforementioned claims, which is **characterized in that**: said lipophilic fiber filament is at least one of a polyester fiber filament, a nylon fiber filament, a polyurethane fiber filament, a polypropylene fiber filament, a polyacrylonitrile fiber filament, a polyvinyl chloride fiber filament, or an oleophilically surface-treated fiber filament material.

10. The microchannel mixer according to any of the aforementioned claims, which is **characterized in that**: said hydrophilic fiber filament is selected from one or more of a high molecular polymer containing at least one hydrophilic group in its main chain or side chain or a fiber filament that has been hydrophilically treated with a physical or chemical method.

11. The microchannel mixer according to any of the aforementioned claims, which is **characterized in that**: said hydrophilic fiber filament is selected from one or more of polypropylene fiber, polyamide fiber or acrylic fiber.

12. The microchannel mixer according to any of the aforementioned claims, which is **characterized in that**: said sheet has a thickness of 0.05mm-5mm, preferably 0.1-1.5mm.

13. The microchannel mixer according to any of the aforementioned claims, which is **characterized in that**: the crevices between said adjacent sheets are wholly filled with any one of the lipophilic or hydrophilic fiber filament; or alternatively, the lipophilic and hydrophilic fiber filaments are filled in a certain proportion, preferably with a filling ratio by weight of 1:50-50:1.

14. The microchannel mixer according to any of the aforementioned claims, which is **characterized in that**: the sheet is of any one or more of metal, ceramics, organic glass, or polyester material.

15. The microchannel mixer according to any of the aforementioned claims, which is **characterized in that**: the shape of the sheet is any one of rectangle, square, polygon, circle, ellipse, or sector.

16. A heavy oil hydrogenation reaction system, which is **characterized in that**: it includes a micro-mixing zone and a heavy oil hydrogenation reaction zone, wherein the micro-mixing zone is used for the mixing of a diluent oil and hydrogen to obtain a hydrogen-carrying fluid, and the micro-mixing zone includes at least one microchannel mixer according to any one of the aforementioned claims 1-15;
wherein said microchannel mixer has an inlet for feeding diluent oil and hydrogen, and an outlet for discharging the hydrogen-carrying fluid;
said heavy oil hydrogenation reaction zone includes at least one heavy oil hydrogenation reactor, in which one or more catalyst beds are arranged, and a hydrogen-carrying fluid distribution component is arranged above at least one catalyst bed;
a feeding mixer is arranged at the bottom of each reactor;
said hydrogen-carrying fluid distribution component is communicated with the outlet of the microchannel mixer through pipeline.

17. The heavy oil hydrogenation reaction system according to claim 16, which is **characterized in that**: when multiple catalyst beds are arranged, a hydrogen-carrying fluid distribution component is arranged above any of the catalyst beds.

18. The heavy oil hydrogenation reaction system according to claim 16, which is **characterized in that**: the mode of feeding at a lower position is adopted for said heavy oil hydrogenation reactor.

19. The heavy oil hydrogenation reaction system according to claim 16, which is **characterized in that**: said feeding mixer adopts a tube-shell type ceramic membrane tube assembly, the heavy oil feeding pipeline is communicated with the ceramic membrane tube side, and the hydrogen pipeline is communicated with the cavity in the shell outside of the ceramic membrane tube; the ceramic membrane tube is arranged along the axial direction of the reactor, and hydrogen diffuses outward through the wall of the ceramic membrane tube to form micron-sized bubbles with a size of 10µm-1mm.

20. The heavy oil hydrogenation reaction system according to claim 16, which is **characterized in that**: said hydrogen-carrying fluid distribution component is in the form of tube, disc, jet, or branch, with the distribution holes and/or slits of said hydrogen-carrying fluid distribution component directing downwards so as to achieve the counter-flow or cross-flow contact with the upward-flowing material(s) in the reactor.

21. The heavy oil hydrogenation reaction system according to claim 16, which is **characterized in that**: cold hydrogen gas pipeline(s) is/are arranged between the catalyst beds.

22. The heavy oil hydrogenation reaction system according to claim 16, which is **characterized in that**: the hydrogen used in the micro-mixing zone and the hydrogen used in the heavy oil hydrogenation reaction zone are a fresh hydrogen gas or a recycled hydrogen gas, preferably a fresh hydrogen gas having a purity of greater than 90 vol% or a recycled hydrogen gas having a purity of greater than 85 vol%.

23. A heavy oil hydrogenation reaction system, which is **characterized in that** it includes a hydrogen-carrying fluid formation zone, a high hydrogen-containing mixed fluid formation zone, and a heavy oil hydrogenation reaction zone; said hydrogen-carrying fluid formation zone comprises at least one microchannel mixer according to any one of the aforementioned claims 1-15,
said microchannel mixer has an inlet for feeding diluent oil and hydrogen, and an outlet for discharging the hydrogen-carrying fluid;
said high hydrogen-containing mixed fluid formation zone includes at least one inorganic membrane hydrogen-oil disperser, the inorganic membrane hydrogen-oil disperser has a tube-shell type structure containing inorganic membrane tube components, and there is a bundle of inorganic membrane tubes in the interior of the shell, a heavy oil raw material pipeline is communicated with the inlet end of the bundle of inorganic membrane tubes, a hydrogen pipeline is communicated with the shell space; hydrogen gas diffuses into the bundle of inorganic membrane tubes through the inorganic membrane tube wall to form a high hydrogen-containing mixed fluid with the heavy oil raw material, the outlet end of the bundle of inorganic membrane tubes is the outlet of the high hydrogen-containing mixed fluid;
said heavy oil hydrogenation reaction zone includes at least one heavy oil hydrogenation reactor, in which one or more catalyst beds are arranged, and a micro-mixing zone is arranged below at least one catalyst bed,
a hydrogen-carrying fluid distribution component is located at the top of said micro-mixing zone, and a high hydrogen-containing mixed fluid distribution component is located at the bottom;
said hydrogen-carrying fluid distribution component is communicated with the material outlet of the microchannel mixer through pipeline,
said high hydrogen-containing mixed fluid distribution component is communicated with the material outlet of the inorganic membrane hydrogen-oil disperser.

24. The heavy oil hydrogenation reaction system according to claim 23, which is **characterized in that**: when multiple catalyst beds are arranged in said heavy oil hydrogenation reaction zone, a micro-mixing zone is arranged below any of the catalyst beds.

25. The heavy oil hydrogenation reaction system according to claim 23, which is **characterized in that**: the mode of feeding at a lower position is adopted for said heavy oil hydrogenation reactor; said heavy oil raw material and hydrogen gas are pre-mixed with a mixing device before entering the reactor.

26. The heavy oil hydrogenation reaction system according to claim 23, which is **characterized in that**: in the micro-mixing zone under said catalyst bed, the hydrogen-carrying fluid is introduced from the upper part, and the high hydrogen-containing mixed fluid is introduced from the lower part; said hydrogen-carrying fluid distribution component is in the form of tube, disc, jet, or branch; said high hydrogen-containing mixed fluid distribution component is in form of sieve plate with open pores, or grid; distribution holes and/or slits of said hydrogen-carrying fluid distribution component direct downward, distribution holes and/or slits of said high hydrogen-containing mixed fluid distribution component run through up and down; a "hydrogen-rich gas-in-oil fluid" is formed by means of the counter-flow or cross-flow contact of the downward-flowing hydrogen-carrying fluid and the upward-flowing high hydrogen-containing mixed fluid, and reaction feeds.

27. The heavy oil hydrogenation reaction system according to claim 16 or 23, which is **characterized in that**: micrometer sized bubbles in the hydrogen-carrying fluid formed in said microchannel mixer have a size of 0.5-900µm, preferably 0.5-50µm.

28. The heavy oil hydrogenation reaction system according to claim 16 or 23, which is **characterized in that**: micrometer sized bubbles in the hydrogen-carrying fluid formed in said microchannel mixer have a disperse uniformity of ≥80%.

29. The heavy oil hydrogenation reaction system according to claim 16 or 23, which is **characterized in that**: 2-10 catalyst beds are arranged in said heavy oil hydrogenation reactor.

30. A heavy oil hydrogenation reaction process, wherein the heavy oil hydrogenation reaction system according to claim 16 is used, which is **characterized in that**: the heavy oil hydrogenation process comprises: (1) in the micro-mixing zone, a diluent oil and hydrogen gas I enter the microchannel mixer, and the resulting mixture flows through the microchannels between fiber filaments in the microchannel component, and is successively cut multiple times by the fiber filaments, forming a hydrogen-carrying fluid containing a large number of micron-sized particles; (2) in the heavy oil hydrogenation reaction zone, a heavy oil raw material and hydrogen gas II enter the feeding mixer from the bottom of the heavy oil hydrogenation reactor, and the resulting mixed material enters the catalyst bed(s) from bottom to top; at the same time, the hydrogen-carrying fluid from the micro-mixing zone enters the catalyst bed(s) from top to bottom, and two reaction streams come into contact for the hydrogenation reaction, and the reaction product flows out from the top of the heavy oil hydrogenation reactor.

31. The heavy oil hydrogenation reaction process according to claim 30, which is **characterized in that**: said hydrogen-carrying fluid is a diluent oil carrying a large number of small hydrogen gas bubbles; the volume flow ratio of hydrogen gas (Nm³/h) to the diluent oil (m³/h) in said hydrogen-carrying fluid is 300:1 to 1:1, preferably 50:1 to 5:1.

32. The heavy oil hydrogenation reaction process according to claim 30, which is **characterized in that**: said hydrogen-carrying fluid is divided into multiple streams, preferably 2-4 streams along the axial direction of the reactor to enter the catalyst beds, the flow rate of each stream of the hydrogen-carrying fluid gradually increases from bottom to top along the axial direction of the reactor (for example, the flow rate of the latter stream increases by 5-20wt% relative to the flow rate of the former stream).

33. The heavy oil hydrogenation reaction process according to claim 30, which is **characterized in that**: the mixing conditions of said micro-mixing zone comprise: the temperature is 50-380°C, and the pressure is 10.0-20.0 MPaG.

34. The heavy oil hydrogenation reaction process according to claim 30, which is **characterized in that**: the micron-sized bubbles in said hydrogen-carrying fluid have a disperse uniformity of ≥80%.

35. The heavy oil hydrogenation reaction process according to claim 30, which is **characterized in that**: said diluent oil is one or more of crude oil, gasoline, kerosene, diesel, atmospheric residue, vacuum residue, gas oil, deasphalted oil, coal tar oil, lubricating oil or anthracene oil.

36. The heavy oil hydrogenation reaction process according to claim 30, which is **characterized in that**: the conditions of the heavy oil hydrogenation reaction comprise: the temperature is 350-480°C, the pressure is 10-20.0 MPaG, the space velocity is 0.2-1.0 h⁻¹, and the hydrogen/oil volume ratio is 500:1-1500:1; the operation conditions of the feeding mixer at the bottom of the reactor are identical to the conditions of the hydrogenation reaction.

37. The heavy oil hydrogenation reaction process according to claim 30, which is **characterized in that**: said heavy oil is selected from one or more of atmospheric residue, vacuum residue, cracked residue, cracked diesel oil, catalytic diesel, vacuum gas oil or deasphalted oil.

38. A heavy oil hydrogenation process, wherein the heavy oil hydrogenation reaction system according to claim 30 is used, which is **characterized in that**: the heavy oil hydrogenation process comprises: (1) a hydrogen-carrying fluid, containing a large number of micron-sized particles formed from a diluent oil and hydrogen gas I with the microchannel mixer in a hydrogen-carrying fluid formation zone, enters the upper part of the micro-mixing zone and flows downward; (2) a high hydrogen-containing mixed fluid, formed by dispersing a heavy oil raw material and hydrogen gas II with an inorganic membrane hydrogen-oil disperser in the high hydrogen-containing mixed fluid formation zone, enters the lower part of the micro-mixing zone and flows upward; (3) in the heavy oil hydrogenation reaction zone, a heavy oil raw material and hydrogen gas III enter the bottom of the heavy oil hydrogenation reactor and enter the micro-mixing zone from bottom to top, mix with the hydrogen-carrying fluid and/or the high hydrogen-containing mixed fluid and form a "hydrogen-rich gas-in-oil fluid", which enters the catalyst bed(s) for the hydrogenation reaction, and the hydrogenation reaction product flows out from the top of the reactor.

39. The heavy oil hydrogenation reaction process according to claim 38, which is **characterized in that**: the volume flow ratio of said hydrogen gas I (Nm³/h) to the diluent oil (m³/h) is 100:1 to 1: 1; the mixing conditions of said microchannel mixer: the temperature is from normal temperature to 380°C, and the pressure is 10.0-20.0 MPaG.

40. The heavy oil hydrogenation reaction process according to claim 38, which is **characterized in that**: said diluent oil is one or more of crude oil, gasoline, kerosene, diesel, atmospheric residue or gas oil.

41. The heavy oil hydrogenation reaction process according to claim 38, which is **characterized in that**: the volume flow ratio of hydrogen gas II (Nm³/h) to the oil raw material (m³/h) is 1:1 to 500:1; the dispersing conditions of the inorganic membrane hydrogen-oil disperser: the temperature is from normal temperature to 380°C, and the pressure is 10.0-20.0 MPaG.

42. The heavy oil hydrogenation reaction process according to claim 38, which is **characterized in that**: said heavy oil raw material is one or more of atmospheric residue, vacuum residue, cracked residue, cracked diesel oil, catalytic diesel, vacuum gas oil, deasphalted oil, coal tar oil, lubricating oil or anthracene oil.

43. The heavy oil hydrogenation reaction process according to claim 38, which is **characterized in that**: said hydrogen-carrying fluid is divided into multiple streams, preferably 2-4 streams along the axial direction of the reactor to enter the micro-mixing zones, and said high hydrogen-containing mixed fluid is divided into multiple streams, preferably 2-4 streams along the axial direction of the reactor to enter the micro-mixing zones;
preferably, the stream number of the hydrogen-carrying fluid is identical to that of the high hydrogen-containing mixed fluid.

44. The heavy oil hydrogenation reaction process according to claim 38, which is **characterized in that**: the volume flow ratio of hydrogen gas III (Nm³/h) to the heavy oil raw material (m³/h) is 10:1 to 800:1, preferably 50:1 to 300:1.

45. The heavy oil hydrogenation reaction process according to claim 38, which is **characterized in that**: the conditions of the heavy oil hydrogenation reaction comprise the temperature is 320-480°C, the pressure is 10-20.0 MPaG, the space velocity is 0.1-1.0 h⁻¹, the hydrogen/oil volume ratio 100:1-1200:1.

46. The heavy oil hydrogenation reaction process according to claim 38, which is **characterized in that**: the micro-mixing zone(s) of the heavy oil hydrogenation reactor is/are filled with an inert ceramic ball, or a protective agent with hydrogenation function; the catalyst bed(s) is/are filled with a conventional heavy oil hydrogenation catalyst.
